(19) Europäisches Patentamt / European Patent Office / Office européen des brevets

(11) **EP 1 982 886 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(21) Anmeldenummer: **08006396.9**

(22) Anmeldetag: **31.03.2008**

(51) Int Cl.:
*B60T 8/1755* (2006.01)　　*B60K 7/00* (2006.01)
*B60K 23/08* (2006.01)　　*B60T 7/12* (2006.01)
*B60W 30/02* (2012.01)　　*B60W 30/18* (2012.01)
*B60W 40/101* (2012.01)　　*B60K 28/16* (2006.01)
*B60L 3/10* (2006.01)　　*B60L 15/20* (2006.01)

(54) **Lastkraftwagen**

Truck

Camion

(84) Benannte Vertragsstaaten:
**DE ES FR GB IT**

(30) Priorität: **16.04.2007 DE 102007017821**

(43) Veröffentlichungstag der Anmeldung:
**22.10.2008 Patentblatt 2008/43**

(73) Patentinhaber: **Liebherr-Components Biberach GmbH**
**88400 Biberach/Riß (DE)**

(72) Erfinder:
• **Fenker, Oliver, Dr.**
**88448 Attenweiler (DE)**
• **Resch, Jürgen, Dipl.-Ing. (FH)**
**88456 Degernau (DE)**

(74) Vertreter: **Thoma, Michael et al**
**Lorenz - Seidler - Gossel**
**Widenmayerstraße 23**
**80538 München (DE)**

(56) Entgegenhaltungen:
EP-A- 0 538 967　　EP-A- 1 466 772
EP-A1- 0 798 153　　EP-A1- 0 822 129
EP-A2- 1 134 142　　WO-A1-93/04888
DE-A1- 4 337 356　　DE-A1- 4 418 539
DE-A1- 10 054 368　　DE-A1- 19 540 067
DE-A1-102005 039 788　　US-A- 5 939 846
US-A1- 2007 021 875

EP 1 982 886 B1

**Beschreibung**

Die vorliegende Erfindung betrifft einen Lastkraftwagen, insbesondere einen Schüttgut-Kipplaster vom sogenannten Large Dump Truck-Typ zum Transport von Minen-Abraum, Rohstoffen und/oder Bodenschätzen, mit einem Fahrwerk mit Rädern, von denen mehrere Räder jeweils einen Einzelradantrieb aufweisen, sowie einer Regelvorrichtung zur Regelung der Drehzahl und/oder des Drehmoments der Einzelradantriebe.

Sogenannte Large Dump Trucks, wie aus der EP 1 359 032 A2 oder der WO 92/04196 bekannt, werden überwiegend in Gewinnungsbetrieben für den Transport der abgebauten Mineralien und Erze eingesetzt. Diese Schüttgutkipper werden in einer Größe von mehreren 100 Tonnen Eigengewicht und Nutzlast hergestellt, so dass spezielle Fahrantriebe notwendig sind, um die entsprechenden, ungeheueren Kräfte und Antriebsbedingungen zu beherrschen. Bei dem aus der WO 92/04196 bekannten Large Dump Truck sind an der Hinterachse vier Räder paarweise zusammengefasst und an zwei am Fahrzeugrahmen beweglich gelagerten Schwingen montiert. Dabei ist jedem der Räder ein separater Elektromotor zugeordnet, so dass die Räder einzeln auch mit unterschiedlichen Drehzahlen angetrieben werden können, insbesondere um bei engen Kurvenfahrten ein Radieren der Räder zu verhindern. Gegebenenfalls kann auch einem Räderpaar ein gemeinsamer Einzelradantrieb zugeordnet sein, so das beispielsweise bei vier Rädern zwei solche Einzelradantriebe vorgesehen sind.

Solche modernen, dieselelektrisch angetriebenen Mining Trucks müssen in der Lage sein, hohe Zugkräfte mit minimalem Radschlupf zu übertragen. Wegen des besonderen Antriebsprinzips sind hierbei aus der Automobilindustrie bekannte Antriebsregelungen nicht geeignet. Wenn der Large Dump Truck im optimalen Radschlupfbereich betrieben wird, führt dies zu minimalem Reifenverschleiß und optimaler Fahrstabilität, da auch die Querführungseigenschaften des Reifens im optimalen Bereich liegen. Dabei wird gefordert, dass eine entsprechende Regelung mit geringem Sensoraufwand realisiert ist und auf verschiedenen und auch schnell wechselnden Untergründen arbeitet. Deshalb ist eine Schlupfregelung, welche lediglich die Differenz zwischen angetriebenen und nicht angetriebenen Rädern begrenzt, nicht ausreichend bzw. nicht möglich.

Ferner soll bei derartigen Large Dump Trucks der Bremsvorgang allein über die Einzelradantriebe gesteuert ohne die Hilfe von mechanischen Bremsen erfolgen. Ein mechanisches Bremssystem soll nur als Halte- oder Notfallbremse zum Einsatz kommen. Da derartige Large Dump Trucks jedoch über ein vom Fahrer vorgegebenes Moment gesteuert werden, ist das durch die Einzelradantriebe gesteuerte Bremsen bis zum Stillstand nicht ohne weiteres möglich, da das Einzelradantriebs-Bremsmoment ein aktives Moment und kein Reaktionsmoment ist, wie beispielsweise das Reibmoment einer mechanischen Bremse. Deshalb muss das Einzelradantriebs-Antriebsmoment auf das vorhandene Lastmoment im Stillstand aktiv geregelt werden. Ältere Konzepte sehen hierzu vor, die Momentengrenze des Bremsmoments bei der Drehzahl Null auf 0 Nm zu begrenzen. Damit ist aber nur ein Stillstand auf gerader Fläche möglich und Einflüsse der Massenbeschleunigung werden nicht berücksichtigt, so dass ein Stop nur mit dem zusätzlichen Einsatz einer mechanischen Bremse möglich und aufgrund der nicht berücksichtigten Umweltbedingungen sehr ruppig wird.

Aus der EP 14 66 772 A2 ist ein Antriebssystem für einen landwirtschaftlichen Schlepper bekannt, bei dem die Räder der Hinterachse durch Elektromotoren über ein schaltbares Getriebe angetrieben und die Vorderräder über Elektromotoren angetrieben werden. Um beim Schalten des Zwischengetriebes an den Hinterrädern ein Zugkraftloch zu vermeiden, wird während des Schaltvorgangs das Drehmoment an den Vorderrädern hochgeregelt, um den Zugkraftabfall an den Hinterrädern zu kompensieren. Im Übrigen sieht das Antriebssystem vor, dass der Fahrer eine gewünschte Geschwindigkeit vorgibt, woraus gewünschte Raddrehzahlen errechnet werden. Aus dem Fahr- und Beschleunigungswiderstand in Verbindung mit der gewünschten Fahrgeschwindigkeit werden Drehmomente für die Elektromotoren errechnet, wobei die Drehmomente der Elektromotoren nach einem vorgegebenen Schlüssel auf die Vorder- und Hinterachsen und die dort vorgesehenen Räder verteilt werden.

Aus der US 2007/0021875 A1 ist weiterhin ein Pkw bekannt, dessen Räder elektrische Einzelradantriebe aufweisen. Bei Kurvenfahrten wird die an sich vorgesehene Verteilung der Raddrehmomente von 50:50 auf die kurveninneren und kurvenäußeren Räder korrigiert, wobei der Korrekturfaktor anhand einer Soll-Gierrate, die aus dem Lenkeinschlag berechnet wird, und einer tatsächlichen Gierrate, die mittels eines Gierraten-Sensors gemessen wird, berechnet wird. Wird durch Vergleich der gemessenen Gierrate mit der aus dem Lenkwinkel berechneten Gierrate ein Untersteuern oder ein Übersteuern festgestellt, wird das genannte Verhältnis von Drehmoment an die kurveninneren Räder zu Drehmoment an die kurvenäußeren Räder in die eine oder andere Richtung verschoben.

Hiervon ausgehend liegt der vorliegenden Erfindung die Aufgabe zugrunde, einen verbesserten Lastkraftwagen der genannten Art zu schaffen, der Nachteile des Standes der Technik vermeidet und letzteren in vorteilhafter Weise weiterbildet. Insbesondere soll eine verbesserte Fahrdynamikregelung geschaffen werden, die ohne großen Sensorikaufwand ein Betreiben des Fahrzeugs im optimalen Radschlupfbereich auch auf verschiedenen und schnell wechselnden Untergründen bewirkt und ein sanftes Anfahren und Halten des Fahrzeugs im Stillstand ermöglicht bzw. ein ungewolltes Rückwärtsrollen verhindert.

Erfindungsgemäß wird diese Aufgabe durch einen Lastkraftwagen mit den Merkmalen des Anspruches 1 gelöst. Bevorzugte Ausgestaltungen der Erfindung sind Gegenstand der abhängigen Ansprüche.

Um auch bei schwierigen Bodenbedingungen das Fahrzeug im optimalen Radschlupfbereich betreiben zu können, wird also vorgesehen, dass die Regelvorrichtung einen separaten Reglerstrang für jeden Einzelradantrieb aufweist und ein vom Fahrer vorgegebenes Soll-Moment auf die Reglerstränge aufteilt, wobei jeder Reglerstrang einen Differentialregler, der das aufgeteilte Soll-Moment in Abhängigkeit eines Lenkwinkels korrigiert und ein entsprechend korrigiertes Soll-Moment bereitstellt, sowie einen Radschlupfregler aufweist, der das aufgeteilte Soll-Moment bzw. den durch den Differentialregler korrigierten Soll-Momentwert in Abhängigkeit eines Radschlupfs korrigiert und einen entsprechenden Einzelradantrieb-Soll-Momentwert bereitstellt. Durch das Vorsehen separater Reglerstränge für jeden Antrieb wird eine einfache Erweiterung auf mehr als zwei Antriebe ermöglicht. Dabei wird das Soll-Moment vom Fahrer zuerst auf die einzelnen Antriebe verteilt, dann durch die Differentialregelung und die Radschlupfregelung korrigiert, und schließlich einem Frequenzumrichter als Soll-Moment übergeben.

Gemäß der Erfindung ist es vorgesehen, dass die Radschlupfregelung eine Drehzahlregelung vorsieht, die einen Soll-Momentwert anhand der Differenz einer tatsächlichen Raddrehzahl und einer Soll-Raddrehzahl bestimmt, wobei die genannte tatsächliche Raddrehzahl insbesondere die Raddrehzahl des angetriebenen Rades selbst ist. Auf einen Abgleich mit Raddrehzahlen nicht angetriebener Räder kann verzichtet werden.

Die Drehzahlregelung kann hierbei vorteilhafterweise mittels eines PI-Reglers bewerkstelligt werden, dem als Eingangsgrößen die tatsächliche Raddrehzahl und die Soll-Raddrehzahl zugeführt wird.

Vorteilhafterweise wird die Soll-Raddrehzahl mit der tatsächlichen Raddrehzahl mitgeführt, wobei durch einen entsprechenden Abtastvorgang die Reaktionsgeschwindigkeit der Regelung erhöht werden kann. Insbesondere wird die Soll-Raddrehzahl hierbei in Abhängigkeit eines Beschleunigungs-Sollwerts bestimmt, der eine Soll-Beschleunigung des jeweiligen Rades und/oder des Fahrzeugs wiedergibt. Insbesondere kann die Soll-Raddrehzahl durch Integration des genannten Beschleunigungs-Sollwerts über die Zeit bestimmt werden.

Um eine komplizierte Sensorik zu vermeiden, kann die Beschleunigungsadaptionsstufe die tatsächliche Fahrzeugbeschleunigung aus der Differenz mehrerer zu verschiedenen Zeitpunkten gespeicherter tatsächlicher Raddrehzahlen bestimmen. Hierbei wird vorteilhafterweise die Differenz der gespeicherten Raddrehzahlen in Abhängigkeit von zuvor durchgeführten Beschleunigungs-Sollwertadaptionen korrigiert, um eine größere Sicherheit bezüglich der aus der Radsatzbeschleunigung bestimmten Fahrzeugbeschleunigung zu erreichen.

Um eine Dämpfung von Schwingungen im Antriebsstrang zu erreichen, umfasst die Radschlupfregelung vorteilhafterweise eine Steigungsbegrenzung, die das Soll-Drehmoment in Abhängigkeit der Steigung des zeitlichen Verlaufs des Soll-Drehmoments begrenzt. Hierdurch kann anstelle eines ansonsten notwendigen PIDT1-Reglers ein einfacher PI-Regler verwendet werden. Eine DT1-Überwachung kann entfallen.

Vorteilhafterweise arbeitet die Radschlupfregelung unabhängig von Drehzahlsignalen nicht angetriebener Räder, so dass entsprechende zusätzliche Drehzahlsensoren entfallen können. Die Radschlupfregelung kann insbesondere alleine in Abhängigkeit von Drehzahlsignalen der angetriebenen und zu regelnden Räder arbeiten.

Zudem kann der Radschlupfregler vorteilhafterweise unabhängig von Informationen über das aktuelle Fahrzeuggewicht und unabhängig von Informationen über die aktuelle Fahrbahnsteigung arbeiten.

Hinsichtlich der Differentialregelung ist in vorteilhafter Weiterbildung der Erfindung vorgesehen, dass das hierdurch entsprechend korrigierte Soll-Moment mittels eines Drehzahlreglers in Abhängigkeit einer Differenz der tatsächlichen Raddrehzahl und einer Soll-Raddrehzahl bestimmt wird. Der Drehzahlregler kann hierbei vorteilhafterweise ein einfacher P-Regler sein, wobei gemäß einer bevorzugten Ausführung der Erfindung der P-Faktor des Drehzahlreglers proportional an den Momenten-Sollwert gekoppelt sein kann.

Die Soll-Raddrehzahl wird hierbei vorteilhafterweise in Abhängigkeit der aktuellen Raddrehzahlen mehrerer Räder, der Fahrwerksgeometrie und des Lenkwinkels bestimmt, wobei die Fahrwerksgeometrie insbesondere durch die Fahrwerksspurbreite und den Achsabstand vorgegeben werden kann.

Um die Soll-Raddrehzahlen anhand der aktuellen Raddrehzahlen mehrerer Räder bestimmen zu können, kann der entsprechende Soll-Drehzahlgeber die aktuellen Raddrehzahlen jeweils in einen Punkt zwischen den entsprechenden Rädern transformieren, diese so transformierten Raddrehzahlen mitteln und hieraus die Soll-Drehzahlen der jeweiligen Räder bestimmen.

In Weiterbildung der Erfindung umfasst die Differentialregelung dabei eine Rampenstufe, mittels derer bei der Bestimmung der Soll-Raddrehzahl eine Beschleunigungsrampe für die Änderung dieser Soll-Raddrehzahl berücksichtigt wird.

In Weiterbildung der vorliegenden Erfindung umfasst die Fahrdynamikregelung eine Stopregelung, die das Fahrzeug bei Vorliegen eines vom Fahrer vorgegebenen Stopsignals, welches beispielsweise durch Drücken eines Bremspedals gegeben werden kann, in den Stillstand bringt und/oder im Stillstand hält, wobei die Stopregelung auf einer Drehzahlregelung basiert, die in Abhängigkeit der Differenz der tatsächlichen Raddrehzahl von der Soll-Raddrehzahl, die in diesem Fall Null beträgt, ein entsprechendes Soll-Moment bereitstellt, mit dem der jeweilige Einzelradantrieb angesteuert wird.

Der Drehzahlregler kann hierbei insbesondere ein vorgesteuerter PI-Regler sein.

Um die Drehzahlregelung auch in der Nähe des Stillstandes in einfacher Weise zu ermöglichen, ohne besonders komplizierte, für den Einsatz in Large Dump Trucks ungeeignete Encoder verwenden zu müssen, ist in besonders vorteilhafter Weiterbildung der Erfindung eine besondere Encoder-Auswertung vorgesehen. Es kann ein einfacher, mehrspuriger Encoder zur Erfassung der tatsächlichen Rad- bzw. Motor- oder Getriebedrehzahl verwendet werden, wobei vorteilhafterweise die Signalauswertung in Form einer parallel durchgeführten flankenabhängigen Einfachauswertung der Signale der mehreren Encoderspuren vorgenommen wird. Durch solche flankenabhängige Einfachauswertungen, die parallel durchgeführt werden, kann ein neuer Drehzahlwert genauso häufig berechnet werden wie mit einer üblichen Vierfachauswertung, ohne dass jedoch die mit einer Vierfachauswertung einhergehenden Einschränkungen im Tastverhältnis der Spursignale gemacht werden müssten. Insbesondere bei kleinen Drehzahlen und damit wenigen Impulsen pro Zeiteinheit kann eine verbesserte Güte der Regelung erreicht werden. Hierdurch können auch einfache magnetische Geber Verwendung finden, bei denen es zu drehzahlabhängigen Abweichungen des Tastverhältnisses kommt, das bei der üblichen Vierfachabtastung zu einem verzerrten Signal führen würde.

Die genannte, verbesserte Encoder-Auswertung kann auch vorteilhafterweise für eine Drehzahlregelung verwendet werden, die ein unerwünschtes Zurückrollen des Fahrzeugs verhindert. Insbesondere kann hierzu ein überblendender Drehzahlregler eingesetzt werden, der als PI-Regler ausgebildet sein kann und die Drehzahl auf Null regelt, wenn ein unerwünschtes Rückwärtsrollen auftritt.

Die Erfindung wird nachfolgend anhand bevorzugter Ausführungsbeispiele und zugehöriger Zeichnungen näher erläutert. In den Zeichnungen zeigen:

Fig. 1: eine schematische Übersicht der Fahrdynamikregelung für einen Large Dump Truck nach einer bevorzugten Ausführung der vorliegenden Erfindung,

Fig. 2: eine schematische Darstellung der an der Radaufstandsfläche eines Rades wirkenden Kräfte,

Fig. 3: eine Übersicht der Schlupfzustände an einem Rad,

Fig. 4: eine Darstellung des funktionalen Zusammenhangs zwischen der von einem Rad übertragenen Umfangskraft und des Umfangsschlupfes anhand einer typischen Schlupfkurve,

Fig. 5: eine schematische Darstellung des Zusammenhangs der an der Aufstandsfläche eines Rades wirkenden Seitenkraft und des zugehörigen Schräglaufwinkels,

Fig. 6: eine schematische Darstellung zur Verdeutlichung des Zusammenhangs zwischen Schräglaufwinkel und Größe der Seitenkraft,

Fig. 7: ein Krempeldiagramm zur Verdeutlichung des Einflusses der Umfangskraft auf die Seitenkraftübertragung,

Fig. 8: eine schematische Übersichtsdarstellung der kombinierten Differential-und Radschlupfregelung nach einer bevorzugten Ausführung der Erfindung,

Fig. 9: eine Übersicht der Reglerstruktur der Radschlupfregelung nach einer vorteilhaften Ausführung der Erfindung,

Fig. 10: eine Darstellung des Verlaufes des Soll-Moments $M_{soll}$ und des korrigier-ten Soll-Momentwertes $M_{soll*}$ im Begrenzungsbetrieb,

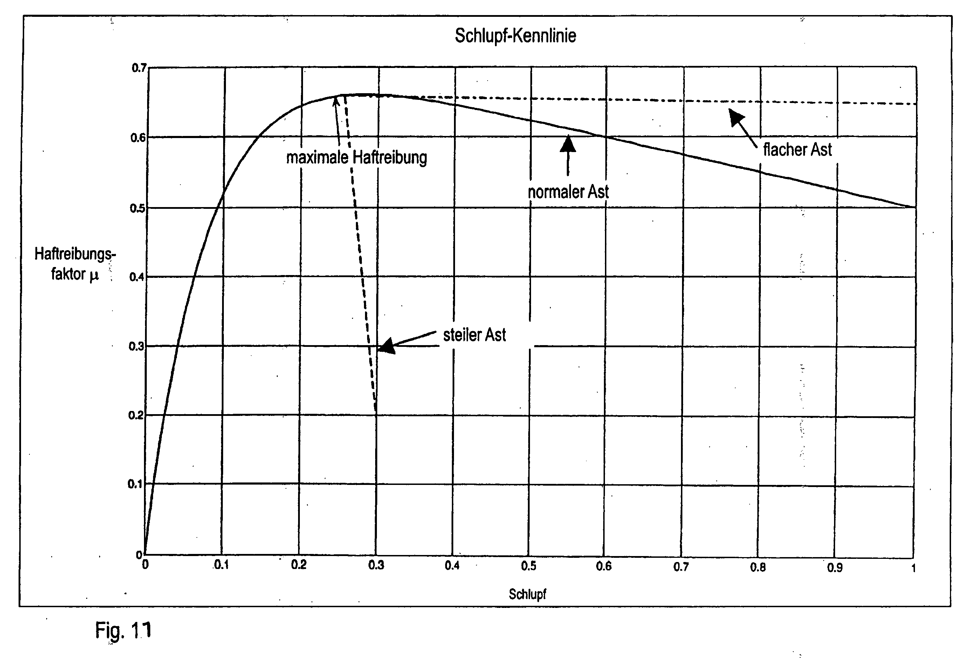

Fig. 11: eine schematische Darstellung verschiedener Zugkraftkennlinien mit steil abfallendem Ast, normal abfallendem Ast und flach abfallendem Ast,

Fig. 12: eine Darstellung des Momentenverlaufs in Abhängigkeit vom Schlupf,

Fig. 13: ein Diagramm, das den Drehmomentverlauf während des Suchbetriebs der Regelvorrichtung nach einer vorteilhaften Ausführung der Erfindung zeigt und deren Arbeitsweise verdeutlicht,

Fig. 14: eine schematische Gesamtdarstellung der elektronischen Differentialregelung nach einer vorteilhaften Ausführung der Erfindung ohne die Radschlupfregelung,

Fig. 15: eine schematische Darstellung der Lenkgeometrie des Large Dump Trucks nach dem Ackermann-Prinzip,

Fig. 16: eine Darstellung des funktionalen Zusammenhangs zwischen Fahrgeschwindigkeit und Traktionskraft gemäß einem alten Konzept einer Stopfunktion,

Fig. 17: eine schematische Darstellung der Signalspuren eines Encoders mit einem Tastverhältnis von 50 %,

Fig. 18: eine schematische Darstellung der Signalspuren eines Encoders mit einem Tastverhältnis ungleich 50 %, wobei die flankenabhängige Einfachauswertung der Signalspuren dargestellt ist,

Fig. 19: eine schematische Gesamtübersicht der Stop-Regelung der Regelvorrichtung des Large Dump Trucks nach einer bevorzugten Ausführung der Erfindung,

Fig. 20: eine schematische Gesamtdarstellung der Anti-Rückwärtsroll-Regelung der Regelvorrichtung des Large Dump Trucks nach einer vorteilhaften Ausführung der Erfindung,

Fig. 21: eine Seitenansicht des Large Dump Trucks nach einer vorteilhaften Ausführung der Erfindung, und

Fig. 22: eine schematische Draufsicht auf das Fahrwerk des Large Dump Trucks aus Fig. 21.

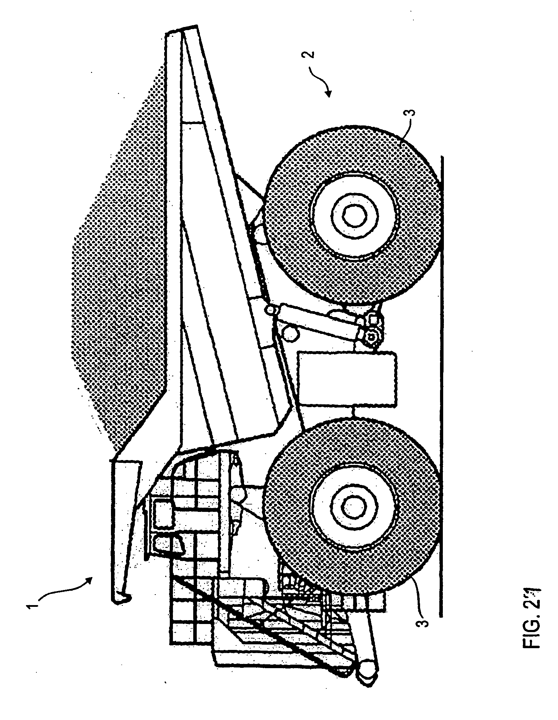

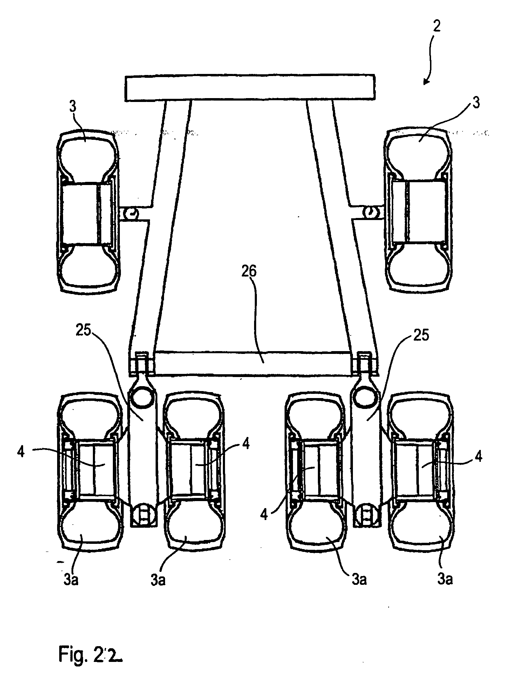

Figur 21 zeigt schematisch einen Large Dump Truck nach einer vorteilhaften Ausführung der vorliegenden Erfindung, der ein Fahrwerk 2 mit Rädern 3 aufweist, die von Einzelradantrieben 4 angetrieben werden. Insbesondere können dabei, wie dies Figur 22 zeigt, die Hinterräder 3a paarweise zusammengefasst an jeweils einer Schwinge 25 aufgehängt sein, die um jeweils liegende Querachsen schwenkbar am Fahrzeugrahmen 26 angelenkt sind. Jedem Paar von Rädern 3a ist dabei ein elektrischer Einzelradantrieb 4 zugeordnet, wobei zwischen den Radpaaren der Hinterradachse kein mechanisches Differential vorgesehen ist. Obwohl in der Figur 22 eine Hinterachsanordnung mit zwei Räderpaaren und somit zwei Antriebssträngen dargestellt ist, versteht es sich, dass auch andere Konfigurationen grundsätzlich möglich sind, beispielsweise die in Figur 22 gezeigte vierrädrige Hinterachsanordnung mit jedem Rad einzeln zugeordneten, also insgesamt vier Einzelradantrieben, oder Hinterachsanordnungen mit mehr als vier Rädern und einer entsprechend abweichenden Anzahl von Einzelradantrieben.

Wie Figur 21 zeigt, trägt das Fahrwerk 2 in an sich bekannter Weise eine Kippmulde, die mit Abraum oder anderem Schüttgut beladbar ist und um eine liegende Querachse zum Zwecke des Abladens kippbar ist. In der gezeichneten Ausführung ist über der Vorderachse unter dem oberen, vorderen Rand der Kippmulde, ein Führerhaus angeordnet, von dem aus der Large Dump Truck 1 gesteuert wird.

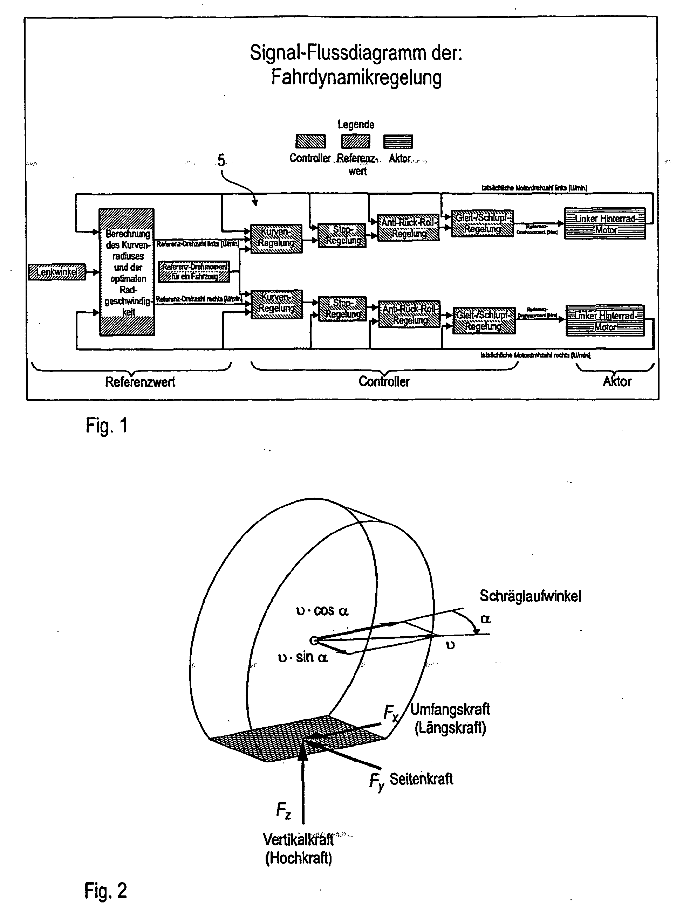

Um ein ansprechendes Fahrverhalten des Mining Trucks zu erreichen, sind, wie in Figur 1 gezeigt, mehrere Fahrerassistenzsysteme vorgesehen, die nachfolgend im einzelnen erläutert werden.

Mining Trucks bzw. Large Dump Trucks werden mit zwei oder mehr Einzelantrieben angetrieben, die nicht mechanisch, z. B. durch ein Differenzialgetriebe, gekoppelt sind. Dies macht es erforderlich eine Differentialregelung zu implementieren, welche die Radgeschwindigkeiten der einzelnen Antriebe zueinander in Abhängigkeit zum Lenkwinkel führt. Zudem kann durch die Differentialregelung ein dem Lenkwinkel entsprechendes Giermoment erzeugt werden, das die Kurvenfahrt unterstützt und damit die Fahreigenschaften des Trucks wesentlich verbessert, da ein Schieben über die Vorderräder minimiert wird. Zudem wird das Durchdrehen oder Blockieren einzelner Räder von der Differentialregelung unterdrückt und wirkt so zusätzlich als zweite Radschlupfregelung.

Die Übertragung der Kräfte zwischen Reifen und Fahrbahn erfolgt an der Radaufstandsfläche (Latsch), die sich unter der Radlast im Kontaktbereich mit der Fahrbahn bildet. Die resultierende Kontaktkraft wird in drei Komponenten zerlegt, wie dies Fig. 2 zeigt, nämlich in Hochrichtung (senkrecht zur Fahrbahn: Vertikalkraft (Hochkraft) Fz), in Längsrichtung Umfangsrichtung: Umfangskraft (Längskraft, Tangentialkraft) Fx) sowie in Querrichtung (Lateralrichtung: Seitenkraft (Lateralkraft) Fy).

In der Hochrichtung liegt eine einseitige Bindung vor. Die horizontalen (zur Fahrbahn parallelen) Kraftkomponenten (längs und quer) werden dagegen im wesentlichen kraftschlüssig durch Reibung übertragen und sind daher grundsätzlich beschränkt.

Für die Übertragung von Umfangskräften im Latsch sind zwei Wirkungen maßgeblich, nämlich einerseits der Kraftschluss, d.h. Adhäsion in der Latschfläche, und andererseits der Formschluss, d.h. Verzahnung zwischen Reifen und Fahrbahnoberfläche.

Das Verhältnis zwischen Umfangskraft *Fx* und Normalkraft *Fz* wird als Kraftschlussbeiwert in

Umfangsrichtung definiert:

$$\mu = \frac{F_x}{F_z}$$

Die Entstehung von Umfangskräften lässt sich durch Scherdeformationen des Laufstreifens in Verbindung mit dem Reibungsverhalten zwischen Lauffläche und Fahrbahn beschreiben. Die Kinematik der Scherdeformationen wird durch den Umfangsschlupf erfasst.

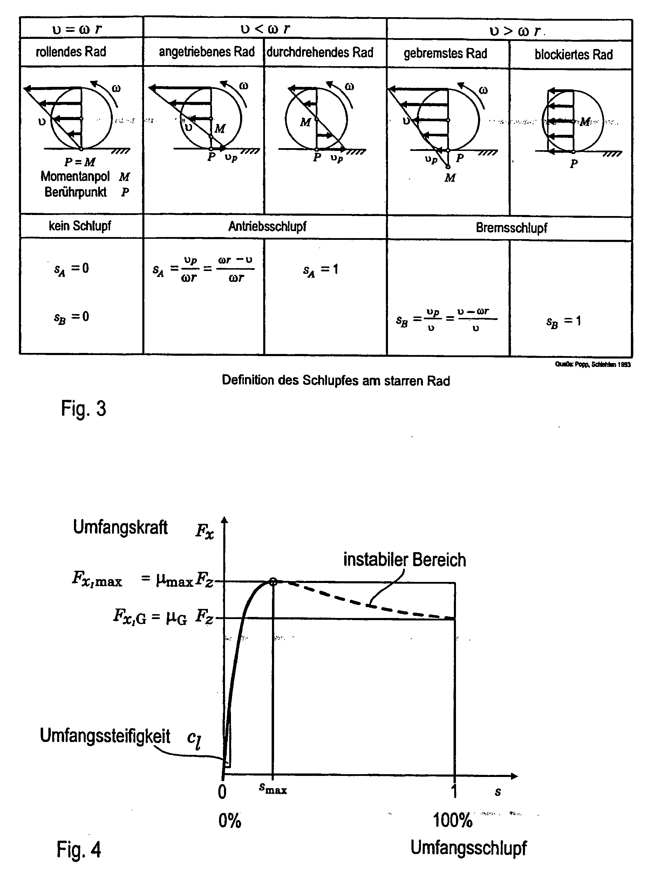

Bei der ebenen Bewegung eines starren Rades werden die beiden Bewegungszustände reines Rollen (kinematisches Rollen, Rollen ohne Gleiten) und kombiniertes Rollen und Gleiten (Wälzen) unterschieden (Radradius $r$, Geschwindigkeit des Radmittelpunkts $v$, Geschwindigkeit des Radaufstandspunkts $vP$, Winkelgeschwindigkeit $\omega$ ). Als Bewegungszustand wird der (dimensionslose) *Umfangsschlupf* definiert. Figur 3 zeigt hierbei die verschiedenen Schlupfzustände. Es wird zwischen dem Antriebsschlupf sA und dem Bremsschlupf *sB* unterschieden, indem der Betrag von *vP* auf den jeweils größeren Wert von *v* bzw. $\omega\, r$ bezogen wird.

*Antriebsschlupf am angetriebenen Rad* (v < $\omega\, r$):

$$s_A = \frac{\upsilon\rho}{\omega r} = \frac{\omega r - \upsilon}{\omega r}$$

*Bremsschlupf* am gebremsten Rad (*v* > $\omega\, r$):

$$s_B = \frac{\upsilon\rho}{\upsilon} = \frac{\upsilon - \omega r}{\upsilon}$$

Häufig wird der Schlupf auch in Prozent angegeben; z.B. sA = 0,9 entspricht sA = 90 %.

Die übertragene Umfangskraft Fx kann dabei in Abhängigkeit des Umfangsschlupfes s (Brems- oder Antriebsschlupf) dargestellt werden, vgl. Fig. 4.

Der typische Verlauf dieser Schlupfkurve ergibt sich wie folgt:

Bei kleinem s erstreckt sich der Haftbereich über fast die gesamte Latschlänge. Die Umfangskraft Fx steigt zunächst entsprechend der fast dreieckförmig bleibenden Fläche unter $\tau x(X)$ etwa linear an, also Fx = $c_l$*s. Die Proportionalitätskonstante $c_l$ wird als Umfangssteifigkeit des Reifens bezeichnet.

Bei weiter zunehmendem s vergrößert sich der Gleitbereich überproportional, und die übertragene Umfangskraft Fx(s) überschreitet ein Maximum Fx;max. Das Maximum definiert den *maximalen Kraftschlussbeiwert* $\mu max$ = Fx;max / Fz.

Der maximale Kraftschlussbeiwert $\mu max$ stimmt nicht mit dem Haftkoeffizienten $\mu H$ der Reibpaarung Gummi-Fahrbahn überein, sondern ist deutlich niedriger. Dies begründet sich darin, dass nur im Übergangsbereich zwischen Haft- und Gleitzone im Latsch der Grenzwert der Haftreibung erreicht wird. Der auf den ersten Blick plausibel erscheinende Grenzwert *Fx;max* = $\mu H$ Fz kann bei einem rollenden Rad aufgrund des geschilderten Aufbaus der Umfangsspannungen im Latsch nicht realisiert werden.

Bei großem Schlupf s fällt die übertragene Umfangskraft Fx auf den Wert FxG für reines Gleiten (durchdrehendes Rad; beim Bremsen blockierendes Rad) ab. Der Kraftschlussbeiwert entspricht dann dem *Gleitreibungskoeffizient $\mu G$* = FxG /Fz.

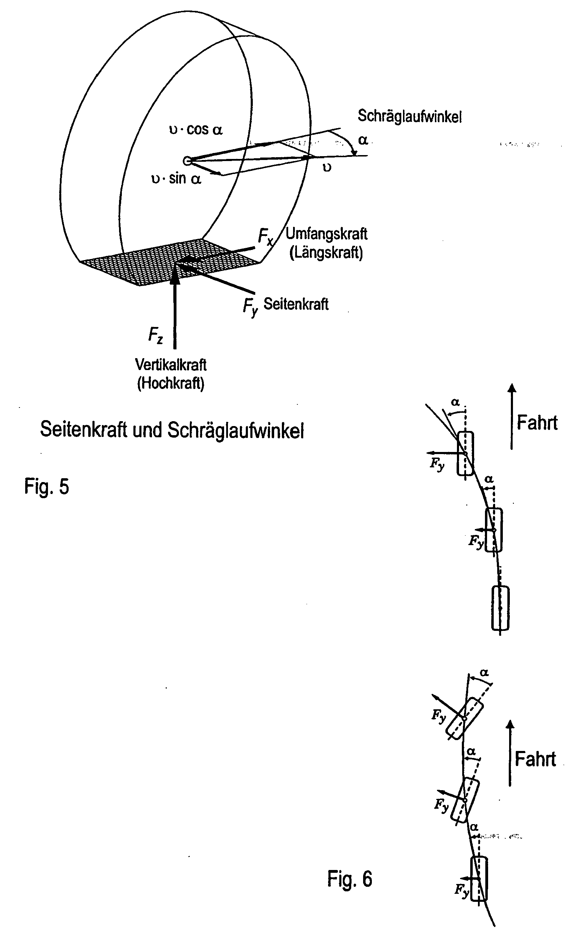

Wird zudem ein frei rollendes Rad (keine Umfangskraft, *Fx* = 0) mit einer Seitenkraft *Fy* beaufschlagt, so stellt sich eine seitliche Geschwindigkeitskomponente ein. Zwischen der Bewegungsrichtung des Radmittelpunkts (Geschwindigkeit *v*) und der Schnittgeraden der Rad- und Fahrbahnebene stellt sich der Schräglaufwinkel $\alpha$ ein, wie dies Figur 5 zeigt, wobei die Beziehung gilt:

$$\sin \alpha = v_y / v$$

Die Größe sin $\alpha$ ist der Querschlupf oder Schräglauf. Für kleine Schräglaufwinkel (im normalen Fahrbetrieb ist $\alpha$ < 10±), können Schräglaufwinkel undschräglauf (Querschlupf) gleichgesetzt werden, wobei gilt:

$$\sin \alpha = \alpha$$

Ein rollendes Rad ist dabei nur dann in der Lage, eine Seitenkraft *Fy* zu übertragen, wenn es schräg zur Fahrtrichtung rollt.

Wie Figur 6 zeigt, stellt sich ein um so größerer Schräglaufwinkel $\alpha$ ein, je größer die Seitenkraft $Fy$ ist.

Soll ein Rad einer gewünschten Sollbahn folgen, so muss es bei steigenden Seitenkräften mit einem größer werdenden Schräglaufwinkel $\alpha$ gegen über der Bahntangente "angestellt" werden, vgl. Figur 6.

Bei allgemeinen Fahrzuständen überträgt der Reifen gleichzeitig eine Umfangskraft Fx und eine Seitenkraft $Fy$. Ähnlich dem Coulombschen Reibungskegel kann die Resultierende von $Fx$ und $Fy$ einen bestimmten Grenzwert nicht überschreiten. Stimmen die maximale Kraftschlussbeanspruchungen $\mu$max in Umfangs und Seitenrichtung überein, so wird dieser Grenzwert durch den Kammschen Kreis wiedergegeben:

$$\sqrt{F_z^2 + F_y^2} \le \mu_{max} \cdot F_z$$

Die maximal übertragbare Seitenkraft $Fy$ ist hierbei bei gleichzeitigem Auftreten einer Umfangskraft Fx kleiner als bei Fx = 0.

Wirkt auf einen Reifen bei gegebener Seitenkraft $Fy$ zusätzlich eine Umfangskraft Fx, so vergrößern sich der Schräglaufwinkel $\alpha$ und der Längsschlupf s.

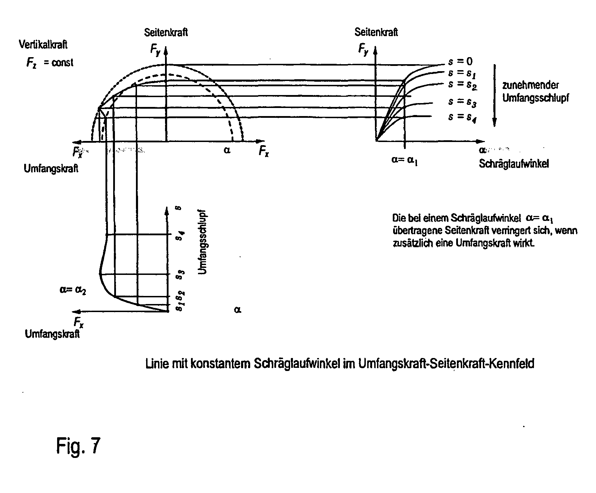

Der Einfluss der Umfangskraft auf die Seitenkraftübertragung wird meist in einem Seitenkraft-Umfangskraft-Kennfeld oder einem sogenannten Krempel-Diagramm dargestellt, vgl. Figur 7. Von besonderem Interesse sind die Linien konstanter Schräglaufwinkel $\alpha$: Bei Zunahme der Umfangskraft Fx muss die Seitenkraft $Fy$ kleiner werden, wenn der Schräglaufwinkel $\alpha$ konstant bleiben soll. Die Linie $\alpha$ =const tangiert den Kammschen Kreis der maximal übertragbaren Horizontalkraft und enden auf dem kleinem Kreis der maximal übertragbaren Gleitreibungskraft.

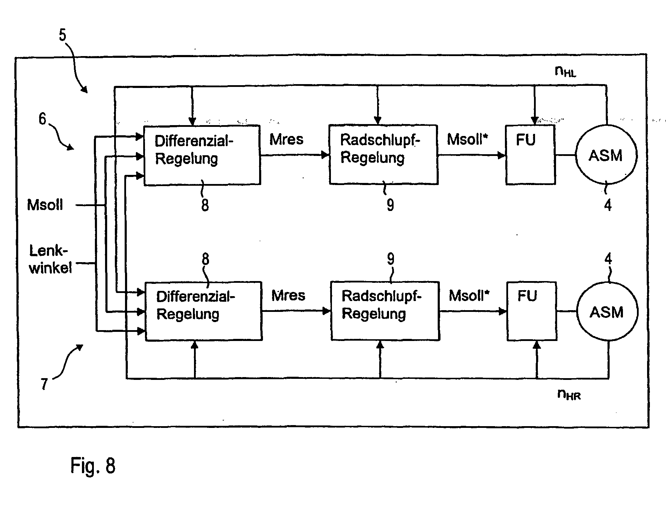

Das Konzept der Regelung sieht, wie Figur 8 zeigt, einen separaten Regelerstrang für jeden Antrieb vor, dies ermöglicht eine einfache Erweiterung auf mehr als zwei Antriebe. Das Sollmoment vom Fahrer (Msoll) wird zuerst auf die einzelnen Antrieb verteilt, dann durch die Differenzialregelung und die Radschlupfregelung korrigiert, und danach dem Frequenzumrichter als Soll moment (Msoll*) übergeben.

Eine typische Zugkraftkennlinie schneidet die Abszisse, wenn die Radumfangsgeschwindigkeit v* gleich der Fahrzeuggeschwindigkeit v ist. Die Geschwindigkeit v ist eine Funktion der Fahrzeugbeschleunigung a, so dass sich die Zugkraftkennlinie in dem gewählten Koordinatensystem in Abhängigkeit von dieser Beschleunigung bewegt. v* ergibt sich aus:

$$v^* = \frac{2 \cdot \pi \cdot r_R}{\ddot{u}} \cdot n^*$$

mit:

$r_R$ = Reifenradius
$\ddot{u}$ = Getriebeübersetzung

Die Bewegung der Antriebskennlinie ist damit abhängig vom Beschleunigungssollwert a*. Ist dieser größer als die Fahrzeugbeschleunigung wandert die Antriebskennlinie schneller als die Zugkraftkennlinie. Der den quasistationären Arbeitspunkt charakterisierenden Schnittpunkt der beiden Kennlinien verschiebt sich damit ebenfalls in Richtung größerer Differenzgeschwindigkeiten. Dagegen bleibt für a* = a seine Lage unverändert, während er für a* < a nach links wandert.

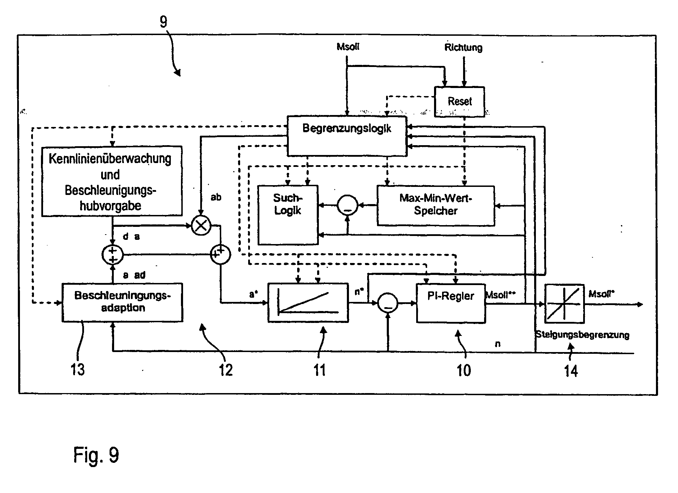

Der in der Radschlupfregelung enthaltene Drehzahlregler, vgl. Figur 9, erhält seine Führungsgröße n* durch Integration des Beschleunigungswertes a*.

Durch die Vorgabe des Beschleunigungssollwertes a* (a* < a, a* = a, a* > a) kann die Radschlupfregelung somit jeden beliebigen Arbeitspunkt auf der Zugkraftkennlinie einstellen. Die Aufgabe der Suchlogik ist es nun, den Arbeitspunkt in das Maximum der aktuellen Zugkraftkennlinie zu legen.

In Abhängigkeit von der Regelabweichung (n* - n) berechnet der PI-Regler, vgl. Figur 9, den Drehmomentensollwert Msoll*, der die vorgegebene Größe Msoll nicht überschreiten darf.

Die Regelung arbeitet zudem passiv, d.h. im Antriebsfall ist die Größe Msoll* auf ein Minimum von 0 Nm begrenzt, es erfolgt also kein aktiver Bremseingriff bei einem durchdrehenden Rad und im Bremsfall wird kein antreibendes Moment erzeugt.

Die Regelung arbeitet insbesondere im 2-Quadrantenbetrieb und benötigt daher für eine Rückwärtsfahrt ein Richtungssignal.

Die Radschlupfregelung wird zurückgesetzt, wenn das Richtungssignal keine Richtung hat oder sein Vorzeichen wechselt, der Betrag vom Msoll kleiner als Mgrenz (Konstante) wird, die mechanische Bremse geschlossen ist, eine negative Drehzahl anliegt oder die Radschlupfregelung manuell abgeschaltet wurde. Im Falle eines Resets ist Msoll = Msoll* und die Regelung wird neu initialisiert. Mgrenz ist so zu wählen, dass bei kleineren Momenten kein Schleudern der Räder auftreten kann und somit keine Schlupfregelung mehr notwendig ist. Zudem führt es auch dazu, dass bei einem Wechsel vom Antreiben zum Bremsen oder umgekehrt die Regelung neu initialisiert wird.

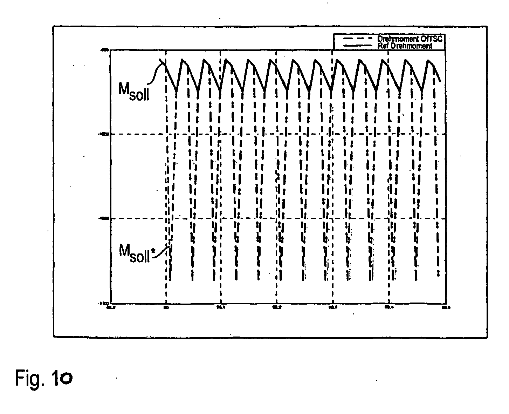

Die Radschlupfregelung versucht dabei immer den Antrieb auf dem optimalen Betriebspunkt der Zugkraftkennlinie zu betreiben. Im Regelfall, ergibt sich aber ein Betriebspunkt unterhalb des Optimums, da der Momenten-Sollwert Msoll kleiner ist als das maximal übertragbare Moment, weil entweder vom Fahrer nicht mehr Moment vorgegeben wird oder durch die begrenzte Leistung der Antriebsmotoren nicht mehr Moment erzeugt werden kann. Für eine betriebstaugliche Radschlupfregelung muss es deshalb möglich sein, das Moment Msoll* auf Msoll zu begrenzen. Eine einfache Begrenzung des Ausgangswertes Msoll* würde aber dazu führen, dass die Suchlogik nicht mehr in der Lage wäre, ein schlupfendes Rad zu erkennen. Deshalb wird durch die Begrenzungslogik der Integrator und der Drehzahlregler so manipuliert, dass Msoll* Msoll nicht überschreitet. Die Manipulation des Integrators führt dazu, dass Msoll* leicht um den Wert Msoll variiert, wie dies Figur 10 im Detail beispielhaft zeigt. Diese Variation des Moments führt zu einem permanenten Abtastvorgang des Untergrunds, der der Suchlogik ermöglicht, Überschreitungen des optimalen Arbeitspunktes zu erkennen. Damit die Begrenzungslogik ein Überschreiten von Msoll* über Msoll erkennen kann, wird der nicht manipulierte Wert des Drehzahlreglers als Vergleich genommen. Die Einflüsse der Begrenzungslogik auf die einzelnen Teile der Regelung werden im jeweiligen Kapitel beschrieben.

Wie schon beschrieben wird die Antriebskennlinie durch den Beschleunigungswert a* verschoben. a* wird gebildet aus:

$$a^* = a\_ad + d\_a$$

wobei a_ad die adaptierte Beschleunigung ist und ca. der realen Fahrzeugbeschleunigung entsprechen sollte und d_a der Beschleunigungsvariationswert ist. Um eine funktionierende Regelung zu erhalten, muss die Bedingung:

$$|a\_ad - a| = |d\_a| \text{ erfüllt sein.}$$

Der Beschleunigungsvariationswert d_a setzt sich zusammen aus:

$$d\_a = (d\_aK + (a\_ad * P\_ad) + a\_Init) * a\_red$$

wobei:

d_aK eine feste Beschleunigungshub Konstante ist. Je genauer a_ad mit a übereinstimmt, desto kleiner kann der d_aK Wert gewählt werden, was zu einem feineren Ausregeln von zu großem Schlupfwerten führt. Im Prinzip muss der d_ak aber so groß gewählt werden, dass er evtl. Fehler von a_ad noch ausgleichen kann.

Mit a_ad * P_ad wird eine Erhöhung von d_a bewirkt, um bei hohen Beschleunigungen die Bedingung |a_ad-a|=|d_a| weiterhin zu erfüllen.

a_Init ist eine Zusatzbeschleunigung und kann die Werte 0 und a_InitK annehmen. Beim Anfahren aus dem Stillstand liegt noch kein Wert für a_ad vor und n* ist noch auf null. Um schnell ein Moment aus dem Stillstand heraus aufbauen zu können, wird a_Init auf a_Initk gesetzt, um möglichst schnell einen n* Wert größer Null aufzubauen, damit sich für den Drehzahlregler genügend schnell ein Regeldifferenz bildet, um dem Msoll Wert folgen zu können. Ebenso wird a_Init auf a_Initk gesetzt, wenn die Regelung zurückgesetzt wird oder Msoll das Vorzeichen wechselt. a_Init wird auf 0 zurückgesetzt sobald ein a_ad Wert größer 0 vorliegt oder das Zeitlimit T_a_Init_On überschritten wird. a_Initk muss größer sein als jede mögliche Beschleunigung des Fahrzeugs.

a_red wird durch die Kennlinienüberwachung aktiviert und kann die Werte 1 und a_redK annehmen.

Die Suchlogik hat die zwei Zustände a0 und a1 und variiert damit den d_a Wert. Beim a1 Zustand ist d_a = d_a, beim a0 Zustand ist d_a = -d_a.

Damit ist es der Suchlogik möglich, die Antriebskennlinie in den optimalen Arbeitspunkt zu verschieben.

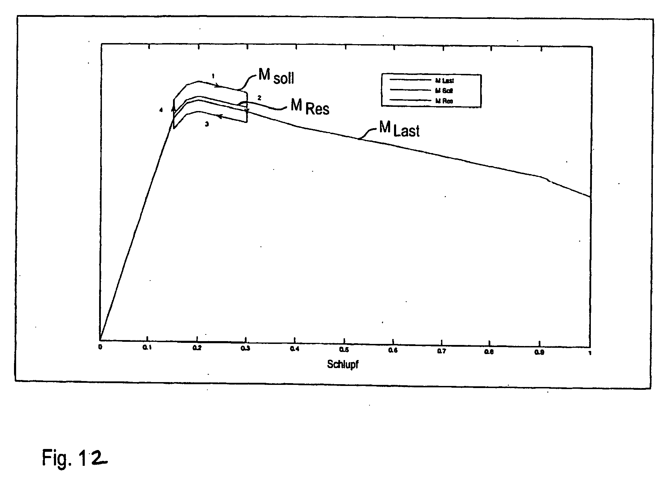

Eine zusätzliche Verkleinerung von d_a während einer a0 Phase ist bei Kraftschlussverhältnissen notwendig, die durch zwei Kennlinien charakterisiert sind, nämlich einerseits Zugkraftkennlinien mit steil abfallendem Ast und andererseits Zugkraftkennlinien mit flach abfallenden Ast, wie dies in Figur 12 gezeigt ist, wobei dort die Zugkraftkennlinie mit steil abfallendem Ast strichliert und die Zugkraftkennlinie mit flach abfallendem Ast strichpunktiert dargestellt ist.

Die zur Unterscheidung der Kennlinien benötigte zusätzliche Information kann aus der Radbeschleunigung ermittelt werden. Diese lässt sich aus der Motordrehzahl n näherungsweise berechnen.

$$a\_R \approx \frac{2 \cdot \pi \cdot r_R}{ü} \cdot \frac{dn}{dt}$$

Zur Erkennung von Kennlinien mit steil abfallenden Ast wird die Beschleunigung a_R beim Umschalten von einer a1 auf eine a0 Phase gespeichert. Anschließend wird die Differenz zwischen gespeicherten und aktueller Radbeschleunigung berechnet.

$$a\_R\_diff = a\_R - a\_R\_Gespeichert$$

Überschreitet a_R_diff während einer a0 Phase den Grenzwert a_R_Grenz wird der a_red auf a_redK gesetzt und damit d_a zusätzlich reduziert. Dies ist notwendig, weil das Reduzieren der Beschleunigung a* während der a0 Phase nicht zu einer reduzierten Radbeschleunigung geführt hat.

Die Suchlogik sucht das Maximum des Kraftschlusses. Da es bei Kennlinien mit flachem Ast kein eindeutiges Maximum gibt, ist eine zusätzliche Überwachung erforderlich, da sonst der Arbeitspunkt unbemerkt zu großen Differenzgeschwindigkeiten abdriften kann. Wenn sich die Regelung im Suchbetrieb befindet und während einer a1 Phase die Radbeschleunigung a_R größer ist als die adaptierte Beschleunigung a_ad mal den a_Fb_Factor , wird ein Zeitzähler gestartet, der nach Ablauf der Zeit Ta1 eine Umschaltung auf die a0 Phase erzwingt und gleichzeitig a_red auf a_redK setzt, obwohl von der Suchlogik noch kein Momentenmaximum entdeckt worden ist.

Die Radschlupfregelung kann den Arbeitspunkt auf der Zugkraftkennlinie nur dann in die gewünschte Richtung bewegen, wenn während der a0 Phase die Beschleunigung a* kleiner als a ist und während der a1 Phase größer als a ist. Da der d_a Wert ungefähr konstant bleibt, ist es notwendig, diesen Wert an die Fahrzeugbeschleunigung a anzupassen. Dies ist Aufgabe der Beschleunigungsadaptionsstufe, welche die nicht bekannte Fahrzeugbeschleunigung nachbildet.

Solange die Differenz von V*-V ungefähr konstant bleibt, ist die mittlere Radbeschleunigung gleich der Fahrzeugbeschleunigung. Bei einem radschlupfgeregelten Antrieb lässt sich somit die Fahrzeugbeschleunigung aus der Radsatzbeschleunigung bestimmen. Hierzu speichert die Beschleunigungsadaptionsstufe jeweils die Motordrehzahl, wenn von einer a0 Phase auf eine a1 Phase umgeschaltet wird. Da zuvor eine a0 Phase anlag, d.h. die Radbeschleunigung verkleinert worden ist, kann davon ausgegangen werden, das die Differenzgeschwindigkeit zu diesem Zeitpunkt minimal war.

Aus der Differenz zweier abgespeicherter Drehzahlen und den zugehörigen Messzeitpunkten t1 und t2 kann dann die mittlere Radsatzbeschleunigung als adaptierte Fahrzeugbeschleunigung a_ad ermittelt werden.

a_ad zum Zeitpunkt t2 ergibt sich dann zu:

$$a\_ad(t2) = \frac{2 \cdot \pi \cdot r_R}{ü} \cdot \frac{n(t2) - n(t1)}{t2 - t1}$$

Um eine größere Sicherheit des Wertes a_ad zu erhalten, wird a_ad aus dem Mittelwert der letzten zwei Adaptionen gebildet.

$$a\_ad = \frac{a\_ad(t2) + a\_ad(t1)}{2}$$

Dieser Wert wird zusätzlich auf plausible Werte limitiert. So gibt es ein konstantes Minimum das mit a_ad_Min definiert wird und ein variabler Maximum a_ad_Max_Var.

a_ad_Max_Var wird aus dem linearen Mittelwert der am Fahrzeug angreifenden Zugkraft ermittelt. Mit der allgemeinen Formel für die Massenbeschleunigung: $a = \dfrac{F}{m}$ ergibt sich dann:

$$a\_ad\_Max\_Var = \frac{1}{m\_mittel} \cdot \frac{1}{t2 - t1} \cdot \int_{t1}^{t2} F\_Zug \cdot dt$$

Für m_mittel wird die halb beladene Fahrzeugmasse verwendet. Bei leeren, vollbeladenen, bergauf und bergab Fahrten stimmt diese Gleichung nicht mehr, aber der Fehler in der Berechnung wird durch den d_a Wert ausgeglichen, somit kann diese Begrenzung in allen Fahrsituationen angewendet werden, ohne auf zusätzliche Informationen wie aktuelles Fahrzeuggewicht und aktuelle Fahrbahnsteigung zuzugreifen.

Da der a_ad Wert nur die Tendenz der Fahrzeugbeschleunigung wiedergeben soll, sollte die Zeit zwischen zwei Adaptionen mehrere hundertstel Sekunden betragen. Da die Wechsel zwischen a0 und a1 Phasen auch schneller geschehen können, ist es notwendig die Adaption auch sperren zu können. Im Begrenzungsbetrieb, in dem es keine a0 Phasen gibt, muss es außerdem auch möglich sein eine Adaption auszulösen. Die weiteren Bedingungen sind im folgendem aufgeführt:

Im Begrenzungsbetrieb wird nach einem konstanten Intervall T_zB eine Adaption ausgelöst.

Nach jeder Adaption erfolgt eine Sperrung der Adaption für die Zeitdauer T_Adap.

Wird a_Init von a_Initk auf 0 gesetzt erfolgt eine Adaption.

Nach jedem Reset wird eine Adaption ausgelöst.

Der Integrator hat die Aufgabe, aus der gebildeten Beschleunigung eine Soll-Drehzahl zu berechnen.

Der Beschleunigungswert errechnet sich zu:

$$a* = d\_a + a\_ad + (d\_a \cdot ab)$$

wobei der Wert ab von der Begrenzungslogik gesteuert wird und die Werte 0 oder - 2 annehmen kann.

Während des Begrenzungsbetriebs liegt dauerhaft eine a1 Phase an und damit ist d_a immer +d_a. Durch den ab Wert hat die Begrenzungslogik die Möglichkeit, n* und n auf den gleichen Wert zu halten. Da im Begrenzungsbetrieb nur kleine Differenzgeschwindigkeiten vorliegen, ist diese Bedingung erfüllt. Der Faktor ab wird auf -2 gesetzt, wenn n* größer ist als n und auf 0, wenn n* kleiner ist als n. Damit wird im Prinzip eine künstliche a0 Phase hergestellt, die sich bei einem ad Wert von -2 ergibt:

$$d\_a + -2d\_a = -d\_a$$

Durch die Variation des ab Wertes pendelt n* somit permanent um n, was zu dem schon beschriebenen Abtastvorgang führt.

Während des Suchbetriebs bleibt der ab Wert auf 0 und hat somit keinen Einfluss auf die Beschleunigung . Die Variation der Beschleunigung erfolgt dann ausschließlich durch den Wechsel von a0 und a1 Phasen, bei denen dann der d_a Wert zwischen - d_a und +d_a wechselt.

Um ein zu großes Abdriften des n* Wertes von n zu vermeiden, kann n* nie größer werden als n + n_Distanz, wobei n_Distanz eine feste Konstante ist.

Während eines Resets wird n* auf n initialisiert.

Der PI-Regler berechnet aus der Differenz von n* - n den Wert Msoll**. Im Begrenzungsbetrieb wird der I-Anteil des Reglers so manipuliert, dass sich Msoll** zu Msoll ergibt.

Für den Ausgang der Radschlupfregelung Msoll* ist der limitierte Wert von Msoll** Für Msoll > 0 gilt:

$$Msoll* = Msoll**\Big|_{0}^{Msoll}$$

Für Msoll < 0 gilt:

$$Msoll* = Msoll**\Big|_{-Msoll}^{0}$$

Um einen Überlauf des Wertes Msoll** zu verhindern und der Suchlogik trotzdem genug Spielraum zu geben, wird dem Wert Msoll** ein gewisser Überlauf gestattet, der mit Mabove definiert wird. Daraus folgt:

Für Msoll > 0 gilt:

$$Msoll** = Msoll**\Big|_{0-MAbove}^{Msoll+MAbove}$$

Für Msoll < 0 gilt:

$$Msoll** = Msoll**\Big|_{-Msoll-MAbove}^{0+MAbove}$$

Der Wert Msoll** wird intern in der Regelung für den Max-Min-Wert-Speicher und die Suchlogik verwendet.

Der Momentenverlauf von Msoll** wird permanent von einem Minimalwert und einem Maximalwert Speicher überwacht. Die gespeicherten Werte werden von der Suchlogik überwacht und die Speicher können von der Suchlogik und der Begrenzungslogik neu initialisiert werden.

Die Umfangskraft Fx bildet im wesentlichen das Lastmoment und deshalb ist das Lastmoment auch vom Schlupf abhängig. Da die Radschlupfregelung drehzahlgeregelt arbeitet, spiegelt sich das Lastmoment im Momenten-Sollwert Msoll** wieder. Der Momentsollwert Msoll** nimmt deshalb beim Überschreiten des optimalen Arbeitspunktes ab, wie es in Figur 12 als Phase 1 zu sehen ist. Wird dann die Radbeschleunigung zurückgenommen, wandert der Arbeitpunkt wieder zurück zu kleineren Schlupfwerten (Phase 3), was wiederum zu einem Ansteigen des Lastmoments und damit zu einem Ansteigen von Msoll** führt. Phase 2 und 4 repräsentieren Ausgleichvorgänge nach dem Wechsel der Beschleunigungsrichtung, vgl. Figur 12.

Diese Minima und Maxima im Momentsollwert Msoll** werden von den Min- und Max-Wertspeicher protokolliert und über die Suchlogik ausgewertet.

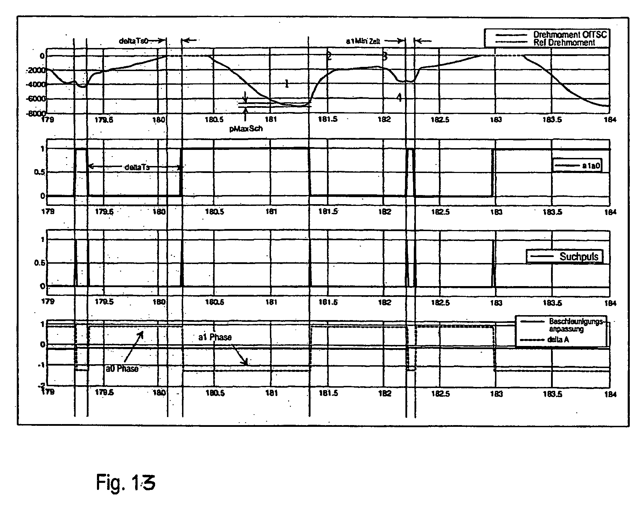

Die Arbeitsweise wird nun anhand eines simulierten Retard- (elektrisches Bremsen) Vorganges erläutert, wie er im Detail beispielhaft in Figur 13 gezeigt ist.

Zum Zeitpunkt t = 180.2, beginnt eine a1 Phase und der Arbeitspunkt wird hin zu größeren Schlupfwerten verschoben (Phase1). Bei t = 181.3 ist der optimale Arbeitspunkt überschritten. Der Max-Wert-Speicher hat ein Maximum entdeckt und pMax hat die pMaxSch Schwelle überschritten. Der prozentuale Maximalwert pMax ist wie folgt definiert:

$$pMax = \frac{Msoll** - MaxWert}{Msoll**}$$

Die Schwelle, um ein Maximum zu erkennen, wurde prozentual gewählt, um dem hohen Momentbereich der Antriebsmotoren gerecht zu werden. Bei einem konstanten Differenzmoment würde bei niedrigen Sollmomenten das Maximum zu spät erkannt und bei hohen Sollmomenten würden Schwingungen im Antriebsstrang als Maximum fehl interpretiert.

Nach dem Erkennen des Maximums wird eine a0 Phase eingeleitet und damit die Beschleunigung reduziert (Phase2), vgl. Figur 13. Nun finden Ausgleichsvorgänge des Getriebes und der Reifen statt, da sich jetzt die Radgeschwindigkeit gegenüber der Fahrzeuggeschwindigkeit verringert. Um dabei entstehende Schwingungen des Antriebsstrangs noch nicht auszuwerten, wird zuerst ein Minimum des Moments gesucht, das gleich wie das Maximum ausgewertet wird. Wird ein Minimum erkannt, kann davon ausgegangen werden, dass sich der Schlupf in Richtung kleiner Werte bewegt und damit wieder in Richtung des Arbeitspunktes. Mit dem Erkennen des Minimums wird der Max-Wert-Speicher neu initialisiert und die Regelung befindet sich dann in Phase 3. Die a0 Phase wird jetzt noch solange aufrechterhalten bis erneut der Arbeitspunkt durchschritten wird, der wieder durch ein Maxima detektiert wird. Danach befinden sich der aktuelle Arbeitspunkt links vom optimalen Arbeitspunkt und es kann wieder eine a1 Phase eingeleitet werden, vgl. Figur 13.

Da es vorkommen kann, dass kein Minimum gefunden wird, ist die Dauer der a0 Phasen auch durch zwei Zeitlimits begrenzt. Zu einem wird mit deltaTs die maximal Dauer der a0 Phase begrenzt und mit deltaTs0 die maximale Dauer, in der 0 Moment vorgeben wird, begrenzt. Umso kürzer diese Zeiten sind desto mehr kann man die Regelung hin zu blockierenden Rädern beim Bremsfall oder zu durchdrehenden Rädern im Antriebsfall ausrichten. Dies ist im praktischen Einsatz notwendig, da bei einer Fehlfunktion der Suchlogik oder bei schwer zu detektierenden Untergründen die Regelung dazu neigen könnte, kein Moment aufzubauen.

Ebenso gibt es eine Mindestzeit für die a1 Phase a1 MinTime, um evtl. Schwingungen im Antriebsstrang kurz nach dem Umschalten auszublenden.

Die Anstiegsgeschwindigkeit von Msoll* wird von einer Steigungsbegrenzung limitiert. Diese dämpft evtl. entstehende Schwingungen im Antriebsstrang und minimiert den Verschleiß des Getriebes. Zudem macht es einen DT1-Anteil des Drehzahlreglers und eine DT1 Überwachung überflüssig.

Das Konzept der Radschlupfregelung zur maximalen Kraftschlussausnutzung zeichnet sich insbesondere durch folgende Punkte aus:

Ein PIDT1 Drehzahlregler konnte wegen der Einführung einer Steigungsbegrenzung auf einen PI-Regler reduziert werden und eine DT1 Überwachung kann entfallen.

Durch das Mitführen von n* mit n wird ein Integratorüberlauf verhindert und im Begrenzungsbetrieb führt es zu den so genannten Abtastvorgang, der die Reaktionsfreudigkeit der Regelung wesentlich verbessert.

Für die Erkennung eines Minimums oder Maximums wird anstatt einer festen Momentendifferenz ein prozentualer Wert einführt, der das Umschalten zwischen a0 und a1 Phase wesentlich verbessert und den hohen Momentenbereich bei Miningtrucks Rechnung trägt.

Die Radschlupfregelung ist so gestaltet, dass sie nur passiv eingreifen kann und damit den Sicherheitsanforderungen von Mining Trucks angepasst ist.

Für die Berechnung der adaptierten Beschleunigung wird anstelle eines Prädiktors der Mittelwert verwendet.

Der Abgleich der adaptierten Beschleunigung mit der theoretisch möglichen Beschleunigung bringt eine wesentliche Verbesserung des adaptierten Werts.

Die Einführung des Zeitlimits deltaTs0 verbessert wesentlich die Reaktionsfreudigkeit der Regelung und ist sinnvoll, da ohne Moment davon ausgegangen werden kann, dass das Rad wieder frei rollt und sich damit wieder im stabilen Bereich der Schlupfkennlinie befindet.

Die zusätzliche Limitierung des Wertes Msoll** verbessert wesentlich die Reaktionsfreudigkeit der Regelung bei Wechsel zwischen a0 und a1 Phasen.

Die Regelung ist dahingehend optimiert, dass sie trotz der recht hohen Antriebsdynamik eines Miningtrucks sicher funktioniert. Zudem ist die Regelung zeitdiskret mit einer recht langen Zykluszeit von 20ms realisiert.

Die Regelung ist in der Lage Steigungen +-10% zu meistern.

Da Mining Trucks mit zwei oder mehr Einzelantrieben angetrieben werden, die nicht mechanisch z. B. durch ein Differenzialgetriebe gekoppelt sind, ist in Weiterbildung der Erfindung eine Differentialregelung implementiert, welche die Radgeschwindigkeiten der einzelnen Antriebe zueinander und in Abhängigkeit zum Lenkwinkel führt.

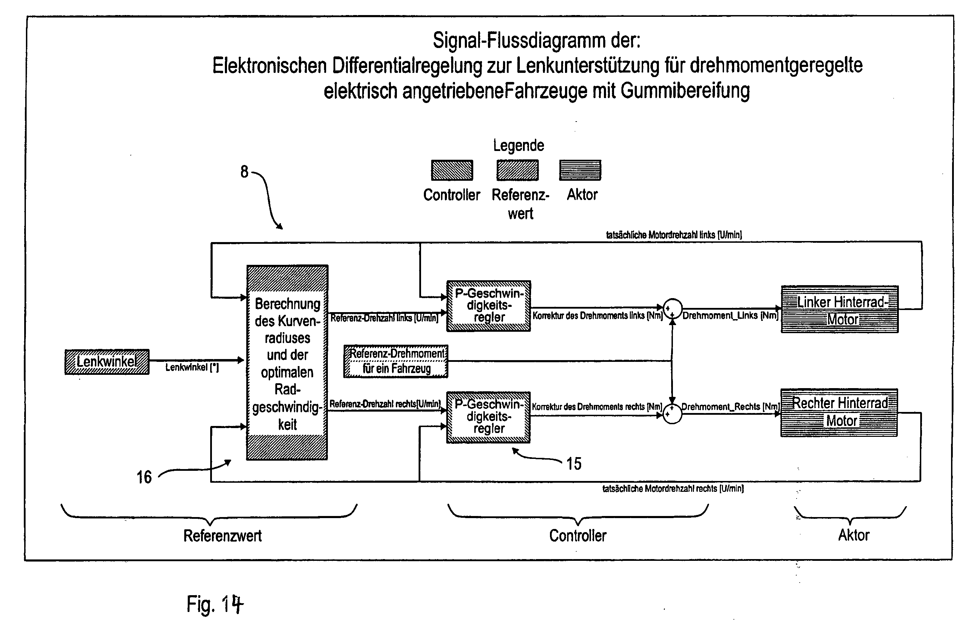

In Figur 14 ist eine Übersicht für einen zweimotorigen Antrieb dargestellt, der aber auch auf beliebig viele Antriebe erweitert werden kann. Da vom Fahrer kein Drehzahlsollwert, sondern ein Momentensollwert vorgegeben wird, ist das Führen der Raddrehzahlen nur durch eine unterlagerte Drehzahlregelung möglich, die in diesem Fall über einen vorgesteuerten P-Regler realisiert ist. So bleibt das Fahrgefühl eines momentgeregelten Antriebs erhalten und die unterlagerte Drehzahlregelung kann die einzelnen Antriebe trotzdem zueinander führen.

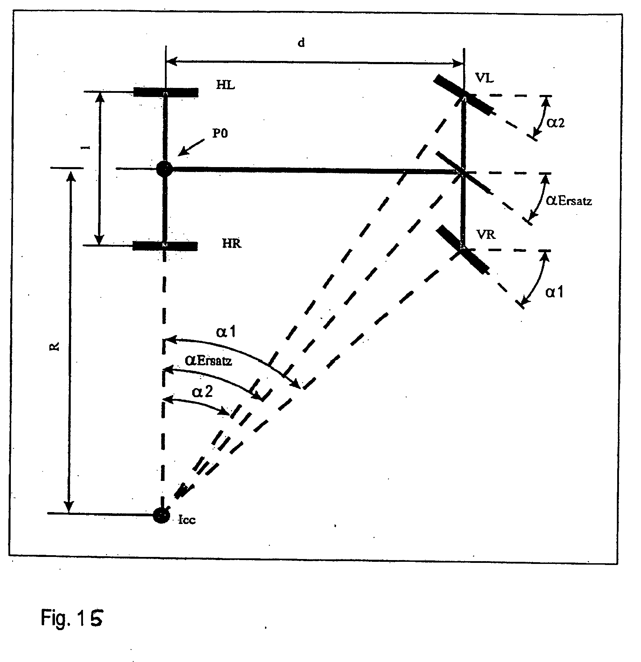

Die Lenkgeometrie von lenkbaren Radfahrzeugen wie Large Dump Trucks kann nach dem Ackermann Prinzip konstruiert werden, wie dies Figur 15 zeigt. Danach treffen sich alle Tangenten aller Räder in einem Punkt, dem sogenannten Icc (instantaneous centre of curvature). Deshalb lassen sich die Bahnradien aller Räder berechnen, wenn die Lenkwinkel der lenkbaren Räder bekannt sind.

Der Radius R der Kurvenbewegung lässt sich wie folgt berechnen:

$$R = \frac{d}{\tan \alpha Ersatz} \; ; \; \left( R - \frac{l}{2} \right) = \frac{d}{\tan \alpha 1} \; ; \; \left( R + \frac{l}{2} \right) = \frac{d}{\tan \alpha 2}$$

(d = Achsabstand, I = Spurbreite)

Die Winkelgeschwindigkeit des Fahrzeuges um den Icc (instantaneous centre of curvature), vgl. Figur 15, berechnet sich dann zu:

$$\omega_{Icc} = \frac{V_{Ersatz}}{\sqrt{d^2 + R^2}} = \frac{V_{HR}}{\left(R - \dfrac{l}{2}\right)} = \frac{V_{HL}}{\left(R + \dfrac{l}{2}\right)} = \frac{V_{P0}}{R}$$

Die Winkelgeschwindigkeit der Räder berechnet sich zu:

$$V_{HL} = r_{wheel} \cdot \omega_{HL} \; ; \; V_{HR} = r_{wheel} \cdot \omega_{HR} \; ; \; V_{P0} = r_{wheel} \cdot \omega_{P0}$$

Mit dem durch die Fahrzeuggeometrie und den aktuellen Lenkwinkel bekannten Kurvenradius des Fahrzeugmittelpunktes lassen sich nun die optimalen Radgeschwindigkeiten berechnen :

$$\frac{\omega_{HR}}{\left(R - \dfrac{l}{2}\right)} = \frac{\omega_{HL}}{\left(R + \dfrac{l}{2}\right)} = \frac{\omega_{P0}}{R}$$

Da im momentengeregelten Betrieb kein Sollwert für $\omega_{P0}$ vorliegt, muss $\omega_{P0}$ aus den aktuellen Raddrehzahlen berechnet werden. Hierzu werden die einzelnen Radgeschwindigkeiten in den Punkt P0 transformiert und der mittlere Wert von $\omega_{P0}$ gebildet.

$$\omega_{P0,HR} = \frac{\omega_{HR} \cdot R}{\left(R - \dfrac{l}{2}\right)} \; ; \; \omega_{P0,HL} = \frac{\omega_{HL} \cdot R}{\left(R + \dfrac{l}{2}\right)} \; ; \; \omega_{P0} = \frac{\omega_{P0,HR} + \omega_{P0,HL}}{2}$$

Aus dem nun bekannten Wert $\omega_{P0}$ lassen sich dann die optimalen Raddrehzahlen für die einzelnen Antriebe berechen.

$$n_{HR} = \frac{30}{\pi} \cdot \frac{\omega_{P0} \cdot \left(R - \dfrac{l}{2}\right)}{R} \; ; \quad n_{HL} = \frac{30}{\pi} \cdot \frac{\omega_{P0} \cdot \left(R + \dfrac{l}{2}\right)}{R} \; ;$$

Wie gezeigt lassen sich aus der Fahrzeuggeometrie, dem Lenkwinkel und den aktuellen Raddrehzahlen die optimalen Raddrehzahlen für jedes Rad berechnen. Diese berechneten optimalen Raddrehzahlen können sich nur durch eine Rampe verändern. Die Steigung der Rampe ist definiert mit:

$$\frac{dw_{Rad} \cdot r_{rad}}{dt} = \frac{dv_{Rad}}{dt} = a_{Rad}$$

Dadurch lässt sich zusätzlich die Radbeschleunigung begrenzen, was zu einem besseren Kraftschluss führt und somit das Schleudern bzw. das Blockieren der Räder minimiert. Außerdem wird das Schleudern bzw. das Blockieren einzelner Räder verhindert, da die Drehzahlen aller angetrieben Räder zueinander geführt werden und damit das Ausreißen einzelner Raddrehzahlen verhindert wird. Somit ist die Differenzialregelung ein Teil des gesamten Radschlupfregelungskonzeptes. Die eigentliche Radschlupfregelung, muss daher nur eingreifen, wenn die Räder trotz der minimierten Radbeschleunigung zum Schleudern und zum Blockieren neigen und alle Räder gleichzeitig damit beginnen.

Um immer einen optimalen Eingriff des vorgesteuerten P-Reglers zu gewährleisten, ist der P-Faktor des Reglers proportional an den Momenten-Sollwert gekoppelt. Somit steigt die Größe des Reglerkorrekturwertes mit der Größe des Sollmoments.

Somit ergibt sich für das resultierende Moment folgender Zusammenhang:

$$M_{Res} = M_{soll} + \left( n_{delta} \cdot \left( K_p \cdot |M_{soll}| \right) \Big|_0^{K_{P,Max}} \right)$$

Um den Sicherheitsanforderungen für Mining Trucks gerecht zu werden, arbeitet diese Regelung nur passiv. Damit ergibt sich folgender Zusammenhang:

$$M_{soll} > 0 \rightarrow M_{Res} \Big|_0^{T_{Max}}$$
$$M_{soll} < 0 \rightarrow M_{Res} \Big|_{-T_{Max}}^{0}$$

Durch das Berechnungsverfahren von $\omega_{P0}$ ergibt sich zudem der Vorteil, dass die Gesamtzugkraft erhalten bleibt, solange genügend Momentenreserven vorhanden sind. Wenn die Radgeschwindigkeiten von den optimalen Radgeschwindigkeiten abweichen, wird in der Regel ein Rad verzögert, während das andere beschleunigt wird. Damit ergibt sich folgender Zusammenhang:

$$T_{Res,HL} + T_{Res,HR} \approx 2 \cdot T_{soll}$$

Dadurch verursacht die Differentialregelung keinen Zugkraftverlust.

Durch das drehzahlgeregelte Konzept der Differentialregelung arbeitet die Regelung auch bei sehr verschiedenen Untergründen zwischen linkem und rechtem Rad immer korrekt, im Unterschied zu anderen Konzepten, die ein Giermoment in Abhängigkeit und Richtung des Lenkwinkels aufbauen. Wenn z. B. der Rollwiderstand des kurveninneren Rads viel größer ist als der des Äußeren, führt das zu einem Übersteuern. In diesem Fall muss das Giermoment der Antriebe entgegengesetzt zur Lenkrichtung wirken, anstatt wie im Normalfall mit der Lenkrichtung. Dies wird durch das drehzahlgeregelte Konzept der Differentialregelung gewährleistet. Es trägt damit wesentlich zur Fahrstabilität bei, und hat dadurch annähernd ESP Eigenschaften.

Die entstehenden Giermoment entlasten zusätzlich die Kräfte auf die Lenkmechanik und der Vorderreifen wodurch der Verschleiß verringert wird.

Die Vorteile der kombinierten Differential- und Radschlupfregelung sind folgende:

Die Radschlupfregelung benötigt nur das aktuelle Drehzahlsignal der Antriebsmotoren und keine zusätzliche Sensorik.

Die Regelung arbeitet unabhängig von der Untergrundbeschaffenheit.

Die Regelung kann auf schnell wechselnde Untergrundbedingungen reagieren.

Die Regelung erkennt auch langsam beginnende Schleuder- oder Blockiervorgänge.

Die Regelung erkennt auch Schleuder oder Blockiervorgänge, wenn alle Räder damit gemeinsam beginnen.

Die Regelung benötigt keine Informationen über das aktuelle Fahrzeuggewicht oder aktuelle Steigungsverhältnisse.

Die Regelung arbeitet beim Antreiben wie ein ASR und beim Bremsen wie ein ABS System.

Durch die Regelung erhöht sich die Fahrstabilität während Geradeaus- und Kurvenfahrten, weil sich die Antriebsräder im optimalen Schlupfbereich befinden und somit immer die optimale Seitenkraft erhalten bleibt.

Die Regelung reduziert den Reifenverschleiß der Vorderräder und den Verschleiß der Lenkmechanik, da durch das erzeugte Giermoment der Hinterachse die Kurvenfahrt unterstützt wird.

Die Regelung reduziert den Reifenverschleiß der Hinterräder, weil das Schieben über die Hinterräder minimiert wird und erhöht die Effektivität des gesamten Antriebssystems, weil die Fahrwiderstände reduziert werden.

Die Regelung arbeitet über den gesamten Geschwindigkeitsbereich des Fahrzeuges.

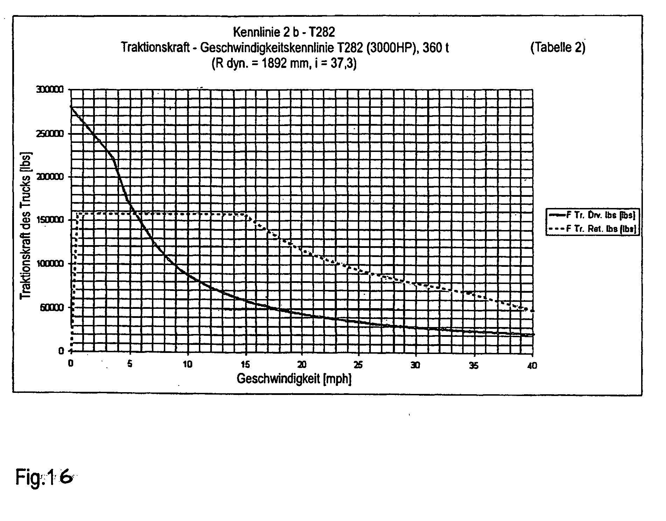

Moderne dieselelektrisch angetriebene Mining Trucks müssen in der Lage sein, hohe Zugkräfte und Bremskräfte mit elektrischen Antrieben zu Erzeugen. Der Bremsvorgang soll rein elektrisch ohne die Hilfe von mechanischen Bremsen erfolgen. Das mechanische Bremssystem des Trucks soll nur als Halte- oder Notfallbremse zum Einsatz kommen. Da Miningtrucks über ein vom Fahrer vorgebendes Moment gesteuert werden, ist das elektrische Bremsen bis zum Stillstand nicht ohne weiteres möglich, da das elektrische Bremsmoment ein aktives Moment und kein Reaktionsmoment ist, wie das Reibmoment einer mechanischen Bremse. Durch diese Eigenschaft muss das elektrische Moment auf das vorhandene Lastmoment im Stillstand aktiv geregelt werden. Ältere Konzepte, wie in Figur 16 gezeigt, sahen vor, die Momentengrenze des Bremsmomentes bei 0U/min auf 0Nm zu begrenzen. Damit ist aber nur ein Stillstand auf gerader Fläche möglich und Einflüsse der Massenbeschleunigung werden auch nicht berücksichtigt. Deshalb war ein Stopp nur mit dem zusätzlichen Einsatz einer mechanischen Bremse möglich und aufgrund der nicht berücksichtigten Umweltbedingungen sehr ruppig. Im folgendem soll hier ein Konzept vorgestellt werden, dass diese Problematik mit Hilfe eines überblendenden Drehzahlreglers löst. Bisher war das nicht möglich, weil durch die schlechte Auflösung der Drehzahlencoder eine Drehzahlregelung in der Nähe des Stillstandes kaum möglich war. Um trotzdem eine Regelung um den Nullpunkt möglich zu machen, ist vorteilhafterweise eine neue Encoder-Auswertung vorgesehen, welche die Auflösung erhöht.

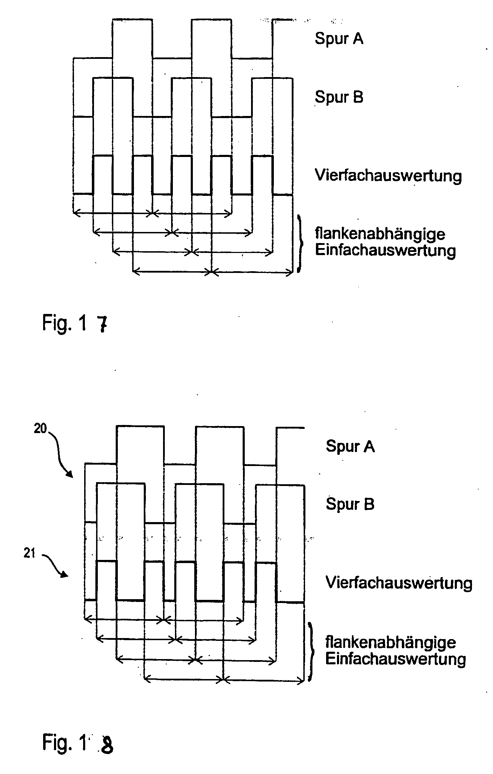

Zur Erfassung der Drehzahl eines Elektromotors wird meistens ein sogenannter Encoder verwendet. Dieser erzeugt pro Umdrehung eine bestimmte Anzahl von Impulsen (Spur A), vgl. Figur 17. Es ist dann möglich, aus dem zeitlichen Abstand zwischen zwei Impulsen die Drehzahl zu bestimmen.

Um neben der Drehzahl auch die Drehrichtung detektieren zu können, erzeugt der Encoder eine zweite Spur mit um 90° versetzten Impulsen (Spur B), vgl. Figur 17.

Sind beide Spuren genau um 90° versetzt und haben ein Tastverhältnis von 50 % so kann mit Hilfe einer Exklusiv-Oder-Verknüpfung von Spur A und Spur B ein Signal erzeugt werden, welches für jede Periode von Spur A vier Flanken erzeugt.

Ein neuer Drehzahlwert kann nur bei einer Flanke eines Signals ausgerechnet werden, da im Zwischenraum nicht bekannt ist wie weit der Weg bis zur nächsten Flanke noch ist. Da im oben erwähnten, durch eine Exklusiv-Oder-Verknüpfung gewonnenem Signal mehr Flanken vorhanden sind, kann mit diesem Signal die Drehzahl öfter bestimmt werden. Man spricht hier von der Vierfachauswertung.

Die Forderung nach einem Tastverhältnis von 50 % lässt sich bei Drehgebern, die robust gegenüber mechanischen Belastungen sein müssen, kaum erfüllen. Gerade bei den im Traktionsbereich verwendeten magnetischen Gebern kommt es zu drehzahlabhängigen Abweichungen des Tastverhältnisses von den 50 %. Dies führt zu einem verzehrten Signal der Vierfachabtastung. Dieses Signal kann nicht mehr zur Berechnung der Drehzahl verwendet werden, da die Pulse bei gleichbleibender Drehgeschwindigkeit nicht mehr gleichmäßig verteilt sind.

Aufgrund der Drehzahlabhängigkeit der Flankenverschiebung kann diese nicht im Nachhinein kompensiert werden.

In beiden Fällen kann der zeitliche Abstand von einer steigenden Flanke der Spur A zur nächsten steigenden Flanke der selben Spur aber zur Berechnung der Drehzahl verwendet werden, nämlich insbesondere durch eine sogenannte Einfachabtastung, vgl. Figur 18. Dieser zeitliche Abstand bleibt bei konstanter Drehzahl unabhängig vom Tastverhältnis gleich. Nur während sich das Tastverhältnis ändert, entsteht ein kleiner Fehler, der aber normalerweise vernachlässigt werden kann.

Auch die Abstände der fallenden Flanken der Spur A zueinander sowie jeweils die Abstände der fallenden bzw. steigende Flanke der Spur B zueinander können zur Drehzahlberechnung verwendet werden, vgl. Figur 18.

In Weiterbildung der Erfindung ist vorgesehen, nicht das durch die Exklusiv-Oder-Verknüpfung gewonnene Signal zur Vierfachauswertung zu nehmen, sondern die vier möglichen flankenabhängigen Einfachauswertungen parallel durchzuführen. Somit kann ein neuer Drehzahlwert genauso häufig berechnet werden wie mit der Vierfachauswertung, ohne dass Einschränkungen im Tastverhältnis der Spursignale gemacht werden müssen. Insbesondere bei kleinen Drehzahlen und damit wenig Impulsen pro Zeiteinheit folgt hieraus eine verbesserte Güte der Regelung.

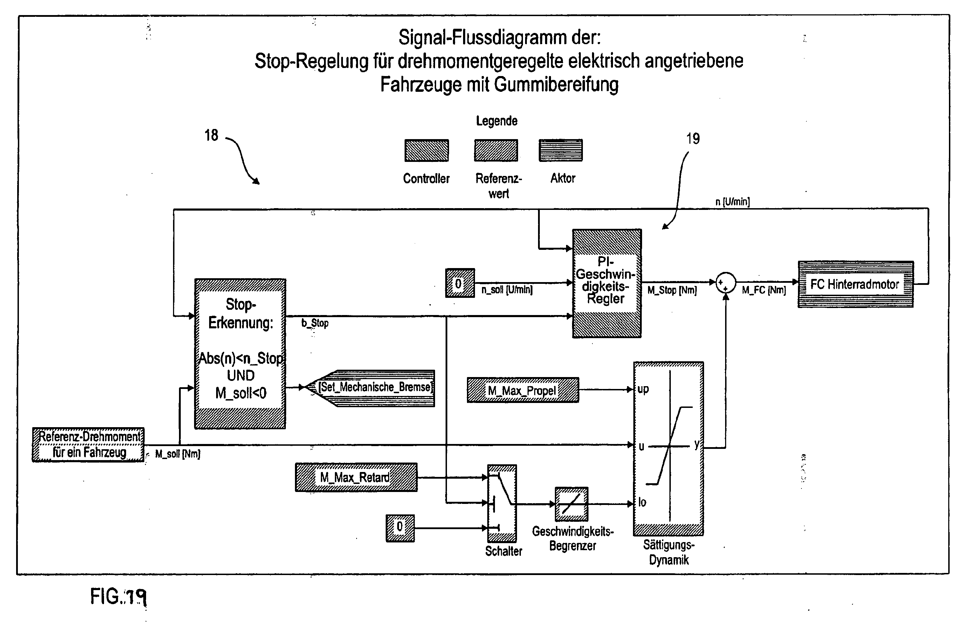

Die Stopp-Regelung, die in Figur 19 in einer Übersicht gezeigt ist, soll den Antrieb elektrisch auf einer Drehzahl von 0rpm halten, wenn M_soll (Der Fahrer betätigt das Retard Pedal) negativ ist und die Drehzahl n kleiner als das Limit n_Stop ist.

Wenn die Stopp-Regelung aktiv ist, muss von dem momentengeregelten Betrieb auf einen drehzahlgeregelten Betrieb übergegangen werden. Diese beiden Betriebsarten sollen sich beim Wechsel fließend d. h. ruckfrei überschneiden, damit der Wechsel beim Fahren nicht wahrgenommen werden kann und somit ein ähnliches Fahrgefühl wie beim Bremsen mit einer mechanischen Bremse entsteht. Versuche den PI-Regler beim Umschalten auf den letzten Sollwert M_sott zu initialisieren, führten zwar zu einem nahtlosen Übergang, der PI-Regler konnte bei großen Werten von M_sott das Moment aber nicht schnell genug abbauen und der Truck fuhr deshalb noch ein Stück rückwärts bis er zum Stillstand kam. Eine Initialisierung mit 0Nm führte zu einem kurzfristigen Zugkraftverlust und damit zu einem Ruck und keinem nahtlosen Übergang.

Diese Problematik wurde deshalb durch einen Vorgesteuerten PI-Regler gelöst.

Solange die Stopp Bedingungen nicht erfüllt sind, wird der PI-Regler auf 0Nm initialisiert und es ist nur die Vorsteuergröße M_soll wirksam. Sobald die Stopp Bedingung erfüllt ist, entfällt die Initialisierung und der PI-Regler beginnt zu regeln. Gleichzeitig wird M_sott auf 0Nm begrenzt. Diese Begrenzung kann sich aber nur über eine Rampe verändern. Das führt dazu, dass das Moment M_soll linear ausgeblendet wird. Dadurch überschneiden sich der Regler Ausgang M_Stop und das Moment M_soll kurz nach dem Einschaltvorgang. Somit ergibt sich ein ruckfreies Umschalten. Das Abbauen von M_soll geschieht somit unabhängig vom PI-Regler und kann über die Rampensteilheit eingestellt werden. Damit wurde ein ruckfreier Stopvorgang ohne Zurückrollen des Trucks erreicht.

Der Fahrer hat zudem die Möglichkeit die mechanische Bremse auszulösen, indem das Retard Pedal mehr als 90% gedrückt wird. Dann wird von der Stopp-Regelung die mechanische Bremse aktiviert, wenn die Stopp-Regelung die Drehzahl auf unter 20 U/min geregelt hat. Dadurch erfolgt das Schließen der mechanischen Bremse nahezu ruckfrei, da kaum noch Bremskraft erforderlich ist. Dies vermindert zudem den Verschleiß der mechanischen Bremse.

Moderne dieselelektrisch angetriebene Mining Trucks haben durch den großen Reifendurchmesser und der Konstruktion des Rahmens vor allem im vollbeladenen Zustand einen ungünstigen Schwerpunkt. Dieser ist zu hoch und zu weit hinten. Dies kann bei einem rückwärts bergab rollen und anschließendem Bremsen zu einem rückwärtigen Überschlagen des Trucks führen. Deshalb muss ein Rückwärtsrollen des Trucks durch die Trucksteuerung verhindert werden. Frühere Konzepte sahen vor, beim Rückwärtsrollen die mechanische Bremse zu schließen und diese erst wieder zu öffnen, wenn das Motormoment eine Momentschwelle überschreitet, die groß genug ist, um den Truck bei größter zulässiger Steigung vorwärts zu beschleunigen. Dies führt allerdings bei kleineren Steigungen zu einem unsanften Anfahrvorgang und einem übermäßigen Verschleiß der Bremsen. Nach einem weiteren Aspekt der vorliegenden Erfindung wird diese Problematik mit Hilfe eines überblendenden Drehzahlreglers gelöst. Bisher war insbesondere durch die schlechte Auflösung der Drehzahlencoder eine Drehzahlregelung in der Nähe des Stillstandes kaum möglich. Um trotzdem eine Regelung um den Nullpunkt möglich zu machen, kann deshalb auch die zuvor beschriebene Encoder-Auswertung eingesetzt sein, welche die Auflösung erhöht.

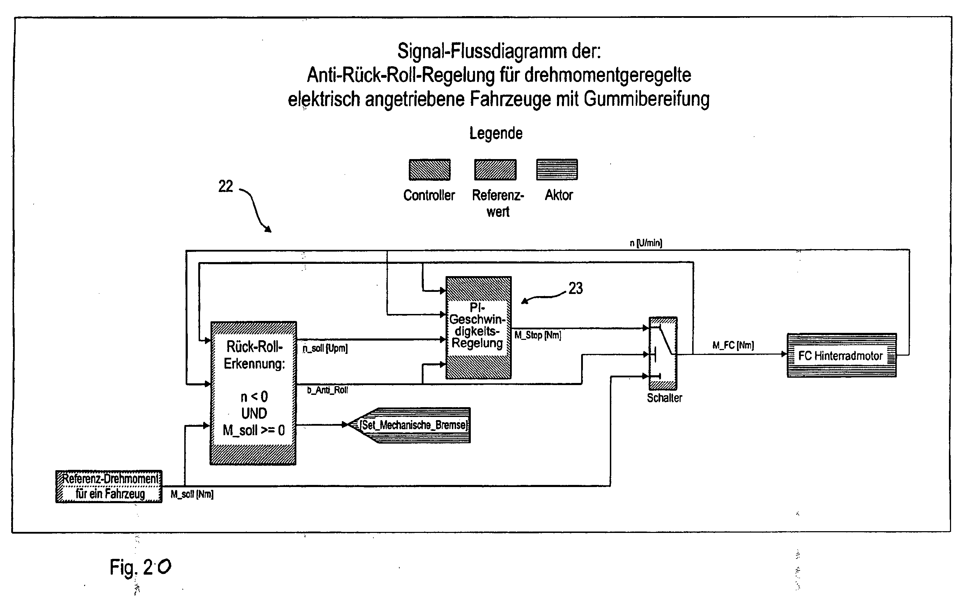

Die Anti Roll Back Control, die in der Übersicht in Figur 20 insgesamt dargestellt ist, soll elektrisch das Rückwärtsrollen des Trucks verhindern.

Es gibt zwei verschiedene Arten des Rückwärtsrollens und daher zwei verschieden Wirkungsweisen der Anti Roll Back Regelung:

In einem ersten Fall ist die Parkbremse nicht geschlossen, vom Fahrer wird kein Pedal betätigt und der Truck beginnt zu rollen.

In einem zweiten Fall will der Fahrer vorwärts Beschleunigen, hat aber ein zu niedriges Sollmoment vorgegeben, um den Truck vorwärts zu beschleunigen und der Truck fängt daher an rückwärts zu rollen.

Im ersten Fall wie oben beschrieben beginnt der Truck rückwärts zu rollen und es liegt kein Sollmoment an. In diesem Fall wird der PI-Regler mit 0Nm initialisiert und aktiviert. Der PI-Regler regelt nun die Drehzahl auf 0 rpm, speichert dann das nötige Moment dafür und aktiviert die mechanische Bremse. Die mechanische Bremse wird jetzt nur geöffnet, wenn das Moment der Antriebe größer ist als das gespeicherte Moment der Regelung. Dadurch wird erreicht, dass nur soviel Moment wie zum Vorwärtsbeschleunigen nötig, gegen die Bremse aufgebaut wird. Dies reduziert erheblich den Bremsenverschleiß, da die Bremse nur geschlossen wird wenn nahezu 0 Drehzahl vorliegt und beim Anfahren nur so viel Motormoment wie nötig gegen die Bremse aufgebaut wird.

Im zweiten Fall wie oben beschrieben hat der Fahrer das Beschleunigungspedal nicht weit genug gedrückt, um den Truck vorwärts zu beschleunigen, deshalb beginnt der Truck rückwärts zu rollen, obwohl der Fahrer eigentlich vorwärts fahren wollte. In diesem Fall wird der PI-Regler mit Sollmoment des Fahrers (M_soll) initialisiert und aktiviert. Der PI-Regler regelt nun auf eine kleine vorwärts Drehzahl und bewegt damit den Truck in die vom Fahrer gewünscht Richtung. Der PI-Regler bleibt nun solange aktiv, bis das vom Fahrer vorgegebene Moment größer ist als das vom PI-Regler berechnete. Damit ist sichergestellt das der Truck jetzt vom Fahrer gesteuert vorwärts fährt und der Einsatz der mechanischen Bremse ist nicht nötig.

**Patentansprüche**

1. Lastkraftwagen vom Large Dump Truck-Typ zum Transport von MinenAbraum, Rohstoffen und/oder Bodenschätzen, mit einem Fahrwerk (2) mit Rädern (3), von denen mehrere Räder (3) jeweils einen Einzelradantrieb (4) aufweisen, sowie einer Regelvorrichtung (5) zur Regelung der Drehzahl und/oder des Drehmoments der Einzelradantriebe (4), wobei die Regelvorrichtung (5) einen separaten Reglerstrang (6, 7) für jeden Einzelradantrieb (4) aufweist und ein vom Fahrer vorgegebenes Soll-Moment ($M_{Soll}$) auf die Reglerstränge (6, 7) aufteilt, wobei jeder Reglerstrang (6, 7) einen Differentialregler (8) zur Korrektur des aufgeteilten Soll-Moments ($M_{Soll}$) in Abhängigkeit eines Lenkwinkels ($\alpha$) und Bereitstellung eines entsprechend korrigierten Soll-Moments ($M_{res}$) sowie einen Radschlupfregler (9) zur Korrektur des aufgeteilten Soll-Moments und/oder des korrigierten Soll-Moments ($M_{res}$) in Abhängigkeit eines Radschlupfs und Bereitstellung eines Einzelradantrieb-Sollmoments ($M_{Soll^*}$) aufweist, wobei der Radschlupfregler (9) eines jeden Reglerstrangs (6, 7) einen Drehzahlregler (10) zur Bestimmung eines Soll-Moments in Abhängigkeit einer Differenz einer tatsächlichen Raddrehzahl (n) des jeweiligen angetriebenen Rads (3) und einer Soll-Raddrehzahl ($n^*$) aufweist.

2. Lastkraftwagen nach dem vorhergehenden Anspruch, wobei der Drehzahlregler (10) als PI-Regler ausgebildet ist.

3. Lastkraftwagen nach einem der beiden vorhergehenden Ansprüche, wobei dem Drehzahlregler (10) ein Soll-Raddrehzahlgeber (11) zur Bestimmung der Soll-Raddrehzahl ($n^*$) in Abhängigkeit eines Rad- und/oder Fahrzeugbeschleunigungs-Sollwerts vorgeschaltet ist.

4. Lastkraftwagen nach dem vorhergehenden Anspruch, wobei der Soll-Raddrehzahlgeber (11) die Soll-Raddrehzahl (n*) durch Integration des Rad- und/oder Fahrzeugbeschleunigungs-Sollwerts (a*) über die Zeit bestimmt.

5. Lastkraftwagen nach einem der beiden vorhergehenden Ansprüche, wobei dem Soll-Raddrehzahlgeber (11) ein Beschleunigungs-Sollwertgeber (12) zur Bestimmung eines Beschleunigungs-Sollwerts (a*) vorgeschaltet ist.

6. Lastkraftwagen nach dem vorhergehenden Anspruch, wobei der Beschleunigungs-Sollwertgeber (12) eine Beschleunigungsadaptionsstufe (13) aufweist, die eine Beschleunigungshubvorgabe in Abhängigkeit einer tatsächlichen Fahrzeugbeschleunigung korrigiert.

7. Lastkraftwagen nach dem vorhergehenden Anspruch, wobei die Beschleunigungsadaptionsstufe (13) die Fahrzeugbeschleunigung aus einer Radsatzbeschleunigung und/oder der Differenz mehrerer zu verschiedenen Zeitpunkten gespeicherter Raddrehzahlen (n(t1), n(t2)...) bestimmt.

8. Lastkraftwagen nach dem vorhergehenden Anspruch, wobei der aus der Radsatzbeschleunigung und/oder der Differenz der zu verschiedenen Zeitpunkten gespeicherten Raddrehzahlen bestimmte adaptierte Beschleunigungswert (a_ad) in Abhängigkeit zuvor durchgeführter Beschleunigungs-Sollwertadaptionen korrigiert wird.

9. Lastkraftwagen nach dem vorhergehenden Anspruch, wobei der adaptierte Beschleunigungswert (a_ad) anhand folgender Beziehung

$$a\_ad = \frac{a\_ad(t2) + a\_ad(t1)}{2}$$

bestimmt wird, wobei gilt

$$a\_ad(t2) = \frac{2 \cdot \pi \cdot r_R}{ü} \cdot \frac{n(t2) - n(t1)}{t2 - t1}$$

10. Lastkraftwagen nach einem der vorhergehenden Ansprüche, wobei der Radschlupfregler (9) einen Steigungsbegrenzer (14) zur Begrenzung des Soll-Drehmoments ($M_{Soll^*}$) in Abhängigkeit der Steigung des zeitlichen Verlaufs des Soll-Drehmoments aufweist.

11. Lastkraftwagen nach einem der vorhergehenden Ansprüche, wobei der Radschlupfregler (9) unabhängig von Drehzahlsignalen nicht angetriebener Räder arbeitet und/oder alleine in Abhängigkeit von Drehzahlsignalen der angetriebenen, zu regelnden Räder (3) arbeitet.

12. Lastkraftwagen nach einem der vorhergehenden Ansprüche, wobei der Radschlupfregler (9) unabhängig von Informationen über das aktuelle Fahrzeuggewicht und unabhängig von Informationen über die aktuelle Fahrbahnsteigung arbeitet.

13. Lastkraftwagen nach einem der vorhergehenden Ansprüche, wobei der Differentialregler (8) einen Drehzahlregler (15) zur Bestimmung des korrigierten Soll-Moments ($M_{res}$) in Abhängigkeit einer Differenz der tatsächlichen Raddrehzahl (n) und einer Soll-Raddrehzahl ($n_{HR}$, $n_{HL}$) aufweist.

14. Lastkraftwagen nach dem vorhergehenden Anspruch, wobei der Drehzahlregler (15) ein P-Regler ist.

15. Lastkraftwagen nach dem vorhergehenden Anspruch, wobei der P-Faktor des Drehzahlreglers (15) proportional an den Momenten-Sollwert gekoppelt ist und das korrigierte Soll-Moment ($M_{res}$) anhand folgender Beziehung

$$M_{Res} = M_{soll} + \left( n_{delta} \cdot \left( K_p \cdot |M_{soll}| \right) \Big|_0^{K_{P.Max}} \right)$$

bestimmt wird.

16. Lastkraftwagen nach einem der vorhergehenden Ansprüche, wobei der Drehzahlregler (15) ein Soll-Drehzahlgeber (16) zur Bestimmung der Soll-Raddrehzahl ($n_{HR}$, $n_{HL}$) in Abhängigkeit der aktuellen Raddrehzahlen mehrerer Räder, der Fahrwerksgeometrie, insbesondere der Fahrwerksspurbreite (I) und dem Achsabstand (d), sowie dem Lenkwinkel ($\alpha$) aufweist.

17. Lastkraftwagen nach dem vorhergehenden Anspruch, wobei der Soll-Drehzahlgeber (16) die aktuellen Raddrehzahlen jeweils in einem Punkt (p0) zwischen den entsprechenden Rädern transformiert, die transformierten Raddrehzahlen mittelt und aus den gemittelten transformierten Raddrehzahlen die Soll-Drehzahlen der jeweiligen Räder bestimmt.

18. Lastkraftwagen nach einem der vorhergehenden Ansprüche, wobei der Differentialregler (8) eine Rampenstufe zur Bestimmung der Soll-Raddrehzahl anhand einer Beschleunigungsrampe für die Änderung der Soll-Raddrehzahl aufweist.

19. Lastkraftwagen nach einem der vorhergehenden Ansprüche, wobei die Regelvorrichtung (5) einen Stop-Regler (18) zum Halten des Fahrzeugs im Stillstand bei Vorliegen eines vom Fahrer vorgegebenen Stopsignals aufweist, wobei der Stop-Regler (18) einen Drehzahlregler (19) aufweist, der in Abhängigkeit der Differenz der tatsächlichen Raddrehzahl (n) von der gewünschten Soll-Raddrehzahl = 0 ein Stopmoment-Signal bereitstellt, mit dem zumindest einer der Einzelradantriebe (4) angesteuert wird.

20. Lastkraftwagen nach dem vorhergehenden Anspruch, wobei der Drehzahlregler (19) ein vorgesteuerter PI-Regler ist.

21. Lastkraftwagen nach einem der beiden vorhergehenden Ansprüche, wobei die tatsächliche Raddrehzahl mittels eines mehrere Spuren aufweisenden Encoders (20) erfasst wird, dem ein Signalauswerter (21) zugeordnet ist, der parallel durchgeführte, flankenabhängige Einfachauswertungen der Signale der mehreren Spuren des Encoders (20) vorsieht.

22. Lastkraftwagen nach einem der vorhergehenden Ansprüche, wobei die Regelvorrichtung (5) einen Rückwärts-Stopregler (22) zur Verhinderung eines unerwünschten Rückwärtsrollens aufweist, der einen überblendenden Drehzahlregler (23) aufweist, der bei Auftreten einer negativen tatsächlichen Raddrehzahl ein Vorwärts-Sollmomentsignal ausreichender Größe bereitstellt.

23. Lastkraftwagen nach dem vorhergehenden Anspruch, wobei der Drehzahlregler (23) bei Nicht-Betätigung eines Fahrerpedals das zur Erreichung der Drehzahl = 0 notwendige Sollmoment speichert, eine mechanische Bremse betätigt und die mechanische Bremse dann wieder öffnet, sobald ein aufgrund einer Anforderung des Fahrers bereitgestelltes Soll-Drehmoment ($M_{Soll^*}$) den gespeicherten Sollmomentwert überschreitet.

24. Lastkraftwagen nach einem der beiden vorhergehenden Ansprüche, wobei der Drehzahlregler (23) bei Vorgabe eines Sollmoments durch den Maschinenführer und bei Auftreten einer trotzdem negativen tatsächlichen Raddrehzahl ein Vorwärts-Sollmoment ausreichender Größe bereitstellt solange, bis das aufgrund der Anforderung des Fahrers bestimmte Sollmoment ($M_{Soll*}$) größer ist als das von dem Drehzahlregler (23) bereitgestellte Vorwärts-Sollmoment.

25. Lastkraftwagen nach einem der vorhergehenden Ansprüche, wobei er frei von mechanischen Differentialen zwischen den Einzelradantrieben ausgebildet ist.

26. Verfahren zur Regelung des Antriebs eines Lastkraftwagens vom Large-Dump-Truck-Typ zum Transport von Minenabraum, Rohstoffen und/oder Bodenschätzen, der mehrere jeweils durch Einzelradantriebe angetriebene Räder aufweist, wobei mittels einer Regelvorrichtung die Drehzahl und/oder das Drehmoment der Einzelradantriebe geregelt wird, wobei das von einem Fahrer vorgegebene Soll-Moment auf mehrere separate Reglerstränge für jeden Einzelradantrieb aufgeteilt wird, wobei in jedem Reglerstrang mittels einer Differentialregelung das aufgeteilte Soll-Moment in Abhängigkeit eines Lenkwinkels korrigiert und mittels einer Radschlupfregelung das aufgeteilte Soll-Moment und/oder das von der Differentialregelung korrigierte Soll-Moment in Abhängigkeit eines Radschlupfs korrigiert wird, wobei die Radschlupfregelung einen Drehzahlregler (10) zur Bestimmung eines Soll-Momentwerts in Abhängigkeit einer Differenz einer tatsächlichen Raddrehzahl (n) des jeweils angetriebenen Rads (3) und einer Soll-Raddrehzahl (n*) aufweist.

**Claims**

1. A truck of the large dump truck type for the transport of mine overburden, raw materials and/or natural resources having chassis (2) with wheels (3) of which a plurality of wheels (3) each have a single wheel drive (4) and having a control device (5) for the control of the speed and/or of the torque of the single wheel drives (4), wherein the control device (5) has a separate control train (6, 7) for each single wheel drive (4) and divides a desired torque (Msoll) set by the operator to the control trains (6, 7), with each control train (6, 7) having a differential controller (8) for the correction of the divided desired torque (Msoll) in dependence on a steering angle ($\alpha$) and provision of a correspondingly corrected desired torque ($M_{res}$) as well as a wheel slip controller (9) for the correction of the divided desired torque and/or of the corrected desired torque ($M_{res}$) in dependence on a wheel slip and provision of a single wheel drive desired torque ($M_{Soll*}$), wherein the wheel slip controller (9) of each control train (6, 7) has a speed controller (10) for the determination of a desired torque in dependence on a difference of an actual wheel speed (n) of the respective driven wheel (3) and a desired wheel speed (n*).

2. A truck in accordance with the preceding claim, wherein the speed controller (10) is made as a PI controller.

3. A truck in accordance with either of the two preceding claims, wherein a desired wheel speed sensor (11) for the determination of the desired wheel speed ($n^*$) in dependence on a desired wheel value and/or a desired vehicle acceleration value is connected before the speed controller (10).

4. A truck in accordance with the preceding claim, wherein the desired wheel speed sensor (11) determines the desired wheel speed ($n^*$) by integration of the desired wheel value and/or the desired vehicle acceleration value ($a^*$) over time.

5. A truck in accordance with one of the two preceding claims, wherein a desired acceleration value sensor (12) for the determination of a desired acceleration value ($a^*$) is connected before the desired wheel speed sensor (11).

6. A truck in accordance with the preceding claim, wherein the desired acceleration value sensor (12) has an acceleration adaptation stage (13) which corrects an acceleration stroke value determined in dependence on an actual vehicle acceleration.

7. A truck in accordance with the preceding claim, wherein the acceleration adaptation stage (13) determines the vehicle acceleration from a wheel set acceleration and/or from the difference of a plurality of wheel speeds (n(t1), n(t2)...) stored at different times.

8. A truck in accordance with the preceding claim, wherein the adapted acceleration value (a_ad) determined from the wheel set acceleration and/or from the difference of the wheel speeds stored at different times is corrected in dependence on previously carried out desired acceleration value adaptations.

9. A truck in accordance with the preceding claim, wherein the adapted acceleration value (a_ad) is determined with reference to the following relationship

$$a\_ad = \frac{a\_ad(t2) + a\_ad(t1)}{2}$$

where applies

$$a\_ad(t2) = \frac{2 \cdot \pi \cdot r_R}{\ddot{u}} \cdot \frac{n(t2) - n(t1)}{t2 - t1}$$

10. A truck in accordance with one of the preceding claims, wherein the wheel slip controller (9) has a gradient limiter (14) for the limitation of the desired torque ($M_{Soll*}$) in dependence on the gradient of the time course of the desired torque.

11. A truck in accordance with one of the preceding claims, wherein the wheel slip controller (9) works independently of speed signals of non-driven wheels and/or works solely in dependence on speed signals of the driven wheels (3) to be controlled.

12. A truck in accordance with one of the preceding claims, wherein the wheel slip controller (9) works independently of information on the current vehicle weight and independently of information on the current road gradient.

13. A truck in accordance with one of the preceding claims, wherein the differential controller (8) has a speed controller (115) for the determination of the corrected desired torque ($M_{res}$) in dependence on a difference of the actual wheel speed (n) and a desired wheel speed ($n_{HR}$, $n_{HL}$).

14. A truck in accordance with the preceding claim, wherein the speed controller (15) is a P controller.

15. A truck in accordance with the preceding claim, wherein the P factor of the speed controller (15) is coupled proportionally to the desired torque value and the corrected desired torque ($M_{res}$) is determined using the following relationship

$$M_{Res} = M_{soll} + \left( n_{delta} \cdot \left( K_p \cdot \left| M_{soll} \right| \right) \Big|_0^{K_{P,Max}} \right)$$

16. A truck in accordance with one of the preceding claims, wherein the speed controller (15) has a desired speed sensor (16) for the determination of the desired wheel speed ($n_{HR}$, $n_{HL}$) in dependence on the current wheel speeds of a plurality of wheels, on the chassis geometry, in particular the chassis track width (I) and the center distance (d), and on the steering angle ($\alpha$).

17. A truck in accordance with the preceding claim, wherein the desired speed sensor (16) transforms the current wheel speeds in each case at a point (p0) between the corresponding wheels, averages the transformed wheel speeds and determines the desired speeds of the respective wheels from the meaned, transformed wheel speeds.

18. A truck in accordance with one of the preceding claims, wherein the differential controller (8) has a ramp stage for the determination of the desired wheel speed with reference to an acceleration ramp for the change in the desired wheel speed.

19. A truck in accordance with one of the preceding claims, wherein the control device (5) has a stop controller (18) to stop the vehicle in the stationary state on the presence of a stop signal set by the driver, wherein the stop controller (18) has a speed controller (19) which provides a stop torque signal in dependence of the difference of the actual wheel speed (n) from the wanted desired speed = 0 with which at least one of the single wheel drives (4) is controlled.

20. A truck in accordance with the preceding claim, wherein the speed controller (19) is a precontrolled PI controller.

21. A truck in accordance with either of the two preceding claims, wherein the actual wheel speed is detected by means of an encoder (20) having a plurality of tracks, with which a signal evaluator (21) is associated which provides flank-dependent simple evaluations of the signals of the several tracks of the encoder (20) carried out in parallel.

22. A truck in accordance with one of the preceding claims, wherein the control device (5) has a backward stop controller (22) for the prevention of an unwanted backward rolling which has a speed controller (23) which changes over and which provides a desired forward torque signal of sufficient magnitude on the occurrence of a negative actual wheel speed.

23. A truck in accordance with the preceding claim, wherein the speed controller (23) stores the desired torque required for the reaching of the speed = 0 on a non-actuation of an operator pedal, actuates a mechanical brake and opens the mechanical brake again as soon as a desired torque ($M_{Soll*}$) provided at a demand of the operator exceeds the stored desired torque value.

24. A truck in accordance with either of the two preceding claims, wherein the speed controller (23) provides a desired forward torque of sufficient magnitude on the setting of a desired torque by the machine operator and on the occurrence of a nevertheless negative actual wheel speed for so long until the desired torque ($M_{Soll*}$) determined on the basis of the demand of the operator is larger than the desired forward torque provided by the speed controller (23).

25. A truck in accordance with one of the preceding claims, wherein it is designed free of mechanical differentials between the single wheel drives.

26. A method for the control of the drive of a truck of the large dump truck type for the transport of mine overburden, raw materials and/or natural resources which has a plurality of wheels driven by single wheel drives, with the speed and/or the torque of the single wheel drives being controlled by means of a control device, wherein the desired torque set by an operator is divided onto a plurality of separate controller trains for each single wheel drive, with the divided desired torque being corrected in each control train by means of a differential control in dependence on a steering angle and the divided desired torque and/or the desired torque corrected by the differential control being corrected by means of a wheel slip control in dependence on a wheel slip, wherein the wheel slip controller has a speed controller (10) for the determination of a desired torque in dependence on a difference of an actual wheel speed (n) of the respective driven wheel (3) and a desired wheel speed (n*).

**Revendications**

1. Camion de type grand tombereau destiné au transport de déblais miniers, de matières premières et/ou de produits du sous-sol, comprenant un châssis (2) comprenant des roues (3), dont plusieurs roues (3) comportent respectivement un entraînement de roue indépendant (4), ainsi qu'un dispositif de régulation (5) destiné à réguler la vitesse de rotation et/ou le couple des entraînements de roue indépendants (4), le dispositif de régulation (5) comportant un train de régulateur séparé (6, 7) pour chaque entraînement de roue indépendant (4) et répartissant un couple de consigne ($M_{Soll}$) prédéterminé par le conducteur entre les trains de régulateur (6, 7), chaque train de régulateur (6, 7) comportant un régulateur différentiel (8) destiné à corriger le couple de consigne réparti ($M_{Soll}$) en fonction d'un angle de braquage ($\alpha$) et à fournir un couple de consigne corrigé ($M_{res}$) correspondant ainsi qu'un régulateur anti-patinage (9) destiné à corriger le couple de consigne réparti et/ou le couple de consigne corrigé ($M_{res}$) en fonction d'un patinage de roue et à fournir un couple de consigne d'entraînement de roue indépendant ($M_{Soll*}$), le régulateur anti-patinage (9) de chaque train de régulateur (6, 7) comportant un régulateur de vitesse de rotation (10) destiné à déterminer un couple de consigne en fonction d'une différence entre une vitesse de roue réelle (n) de la roue entraînée respective (3) et une vitesse de roue de consigne (n*).

2. Camion selon la revendication précédente, le régulateur de vitesse de rotation (10) étant réalisé en tant que régulateur PI.

3. Camion selon l'une des deux revendications précédentes, un transmetteur de vitesse de rotation de roue de consigne (11) destiné à déterminer la vitesse de rotation de roue de consigne (n*) en fonction d'une valeur de consigne d'accélération de roue et/ou de véhicule étant placé en amont du régulateur de vitesse de rotation (10).

4. Camion selon la revendication précédente, le transmetteur de vitesse de rotation de roue de consigne (11) déterminant la vitesse de rotation de roue de consigne (n*) en intégrant la valeur de consigne d'accélération de roue et/ou de véhicule (a*) dans le temps.

5. Camion selon l'une des deux revendications précédentes, un transmetteur de valeur de consigne d'accélération (12) destiné à déterminer une valeur de consigne d'accélération (a*) étant placé en amont du transmetteur de vitesse de rotation de roue de consigne (11).

6. Camion selon la revendication précédente, le transmetteur de valeur de consigne d'accélération (12) comportant un niveau d'adaptation d'accélération (13) qui corrige une spécification de course d'accélération en fonction d'une accélération réelle du véhicule.

7. Camion selon la revendication précédente, le niveau d'adaptation d'accélération (13) déterminant l'accélération du véhicule à partir d'une accélération d'essieu et/ou de la différence entre plusieurs vitesses de rotation de roue (n(t1), n(t2)...) enregistrées à différents moments.

8. Camion selon la revendication précédente, la valeur d'accélération adaptée (a_ad) déterminée à partir de l'accélération d'essieu et/ou de la différence entre les vitesses de rotation de roue enregistrées à différents moments étant corrigée en fonction d'adaptations de valeur de consigne d'accélération effectuées précédemment.

9. Camion selon la revendication précédente, la valeur d'accélération adaptée (a_ad) étant déterminée à l'aide de la relation suivante

$$a\_ad = \frac{a\_ad(t2) + a\_ad(t1)}{2}$$

étant établi que

$$a\_ad(t2) = \frac{2 \cdot \pi \cdot r_R}{\ddot{u}} \cdot \frac{n(t2) - n(t1)}{t2 - t1}$$

10. Camion selon l'une des revendications précédentes, le régulateur anti-patinage (9) comportant un limiteur de montée (14) destiné à limiter le couple de consigne ($M_{Soll*}$) en fonction de la montée de la variation dans le temps du couple de consigne.

11. Camion selon l'une des revendications précédentes, le régulateur anti-patinage (9) fonctionnant indépendamment de signaux de vitesse de rotation de roues non entraînées et/ou fonctionnant uniquement en fonction de signaux de vitesse de rotation des roues (3) entraînées à réguler.

12. Camion selon l'une des revendications précédentes, le régulateur anti-patinage (9) fonctionnant indépendamment d'informations concernant le poids actuel du véhicule et indépendamment d'informations concernant la montée de la piste.

13. Camion selon l'une des revendications précédentes, le régulateur différentiel (8) comportant un régulateur de vitesse de rotation (15) destiné à déterminer le couple de consigne corrigé ($M_{res}$) en fonction d'une différence entre la vitesse de rotation de roue réelle (n) et une vitesse de rotation de roue de consigne ($n_{HR}$, $n_{HL}$).

14. Camion selon la revendication précédente, le régulateur de vitesse (15) étant un régulateur P.

**15.** Camion selon la revendication précédente, le facteur P du régulateur de vitesse de rotation (15) étant associé proportionnellement à la valeur de consigne de couple et le couple de consigne corrigé ($M_{res}$) étant déterminé à l'aide de la relation suivante

$$M_{Res} = M_{soll} + \left( n_{delta} \cdot \left( K_p \cdot \left| M_{soll} \right| \right) \Big|_0^{K_{P,Max}} \right).$$

**16.** Camion selon l'une des revendications précédentes, le régulateur de vitesse de rotation (15) comportant un transmetteur de vitesse de rotation de consigne (16) destiné à déterminer la vitesse de rotation de roue de consigne ($n_{HR}$, $n_{HL}$) en fonction des vitesses de rotation de roue actuelles de plusieurs roues, de la géométrie du châssis, notamment de l'écartement des roues du châssis (I) et de l'entraxe (d), ainsi que de l'angle de braquage ($\alpha$).

**17.** Camion selon la revendication précédente, le transmetteur de vitesse de rotation de consigne (16) transformant les vitesses de rotation de roue actuelles respectivement en un point (p0) entre les roues correspondantes, calculant la moyenne des vitesses de rotation de roue transformées et déterminant les vitesses de rotation de consigne de chaque roue à partir de la moyenne des vitesses de rotation de roue transformées.

**18.** Camion selon l'une des revendications précédentes, le régulateur différentiel (8) comportant un niveau de rampe destiné à déterminer la vitesse de rotation de roue de consigne à l'aide d'une rampe d'accélération pour la modification de la vitesse de rotation de roue de consigne.

**19.** Camion selon l'une des revendications précédentes, le dispositif de régulation (5) comportant un régulateur d'arrêt (18) destiné à maintenir le véhicule à l'arrêt en présence d'un signal d'arrêt prédéterminé par le conducteur, le régulateur d'arrêt (18) comportant un régulateur de vitesse de rotation (19) qui fournit un signal de couple d'arrêt en fonction de la différence entre la vitesse de rotation de roue réelle (n) et la vitesse de rotation de roue de consigne souhaitée = 0, le signal de couple permettant de commander au moins l'un des entraînements de roue indépendants (4).

**20.** Camion selon la revendication précédente, le régulateur de vitesse de rotation (19) étant un régulateur PI à asservissement.

**21.** Camion selon l'une des deux revendications précédentes, la vitesse de rotation de roue réelle étant acquise au moyen d'un codeur (20) présentant plusieurs pistes auquel est assigné un dispositif d'évaluation de signal (21) qui prévoit des évaluations individuelles dépendantes du front et effectuées en parallèle des signaux des plusieurs pistes du codeur (20).

**22.** Camion selon l'une des revendications précédentes, le dispositif de régulation (5) comportant un régulateur d'arrêt de marche arrière (22) pour empêcher un déplacement vers l'arrière non souhaité, qui comporte un régulateur de vitesse de rotation (23) se superposant, qui fournit un signal de couple de consigne de marche avant de grandeur suffisante en cas d'une vitesse de rotation de roue réelle négative.

**23.** Camion selon la revendication précédente, le régulateur de vitesse de rotation (23) enregistrant le couple de consigne nécessaire pour atteindre la vitesse de rotation = 0 en cas de non actionnement d'une pédale de conducteur, actionnant un frein mécanique et desserrant de nouveau le frein mécanique dès qu'un couple de consigne ($M_{Soll*}$) fourni en raison d'une demande du conducteur dépasse la valeur de couple de consigne enregistrée.

**24.** Camion selon l'une des deux revendications précédentes, le régulateur de vitesse de rotation (23) fournissant un couple de consigne de marche avant de grandeur suffisante en cas de spécification d'un couple de consigne par le conducteur de machine et en présence d'une vitesse de rotation de roue réelle tout de même négative, jusqu'à ce que le couple de consigne ($M_{Soll*}$) déterminé en raison de la demande du conducteur soit supérieur au couple de consigne de marche avant fourni par le régulateur de vitesse de rotation (23).

**25.** Camion selon l'une des revendications précédentes, le camion étant réalisé sans différentiel mécanique entre les entraînements de roue indépendants.

**26.** Procédé de régulation de l'entraînement d'un camion de type grand tombereau destiné au transport de déblais miniers, de matières premières et/ou de produits du sous-sol, qui comporte plusieurs roues entraînées respectivement par des entraînements de roue indépendants, la vitesse de rotation et/ou le couple des entraînements de roue indépendants étant régulés au moyen d'un dispositif de régulation, le couple de consigne prédéterminé par un conducteur étant réparti entre plusieurs trains de régulateur séparés pour chaque entraînement de roue indépendant, le couple de consigne réparti étant corrigé dans chaque train de régulateur au moyen d'une régulation de différentiel en fonction d'un angle de braquage et le couple de consigne réparti et/ou le couple de consigne corrigé par la régulation différentielle étant corrigés au moyen d'une régulation anti-patinage en fonction d'un patinage de roue, la régulation anti-patinage comportant un régulateur de vitesse de rotation (10) destiné à déterminer une valeur de couple de consigne en fonction d'une différence entre une vitesse de rotation de roue réelle (n) de la roue entraînée (3) respective et une vitesse de rotation de roue de consigne (n*).

## Signal-Flussdiagramm der:
## Fahrdynamikregelung

Legende

Controller  Referenz-  Aktor
wert

5

tatsächliche Motordrehzahl links [U/min]

| Lenkwinkel | Berechnung des Kurven-radiuses und der optimalen Rad-geschwindig-keit | Referenz-Drehzahl links [U/min] | Kurven-Regelung | Stop-Regelung | Anti-Ruck-Roll-Regelung | Gleit-/Schlupf-Regelung | Referenz-Drehmoment [Nm] | Linker Hinterrad-Motor |

Referenz-Drehmoment für ein Fahrzeug

Referenz-Drehzahl rechts [U/min]  Kurven-Regelung  Stop-Regelung  Anti-Ruck-Roll-Regelung  Gleit-/Schlupf-Regelung  Referenz-Drehmoment [Nm]  Linker Hinterrad-Motor

tatsächliche Motordrehzahl rechts [U/min]

Referenzwert        Controller        Aktor

## Fig. 1

Schräglaufwinkel

$\upsilon \cdot \cos \alpha$        $\alpha$

$\upsilon \cdot \sin \alpha$        $\upsilon$

$F_x$ Umfangskraft
(Längskraft)

$F_y$ Seitenkraft

$F_z$
Vertikalkraft
(Hochkraft)

## Fig. 2

| $\upsilon = \omega\, r$ | $\upsilon < \omega\, r$ | | $\upsilon > \omega\, r$ | |
|---|---|---|---|---|
| rollendes Rad | angetriebenes Rad | durchdrehendes Rad | gebremstes Rad | blockiertes Rad |
| $P = M$ Momentanpol $M$ Berührpunkt $P$ | | | | |
| kein Schlupf | Antriebsschlupf | | Bremsschlupf | |
| $s_A = 0$ | $s_A = \dfrac{\upsilon_p}{\omega r} = \dfrac{\omega r - \upsilon}{\omega r}$ | $s_A = 1$ | | |
| $s_B = 0$ | | | $s_B = \dfrac{\upsilon_p}{\upsilon} = \dfrac{\upsilon - \omega r}{\upsilon}$ | $s_B = 1$ |

Quelle: Popp, Schiehlen 1993

Definition des Schlupfes am starren Rad

## Fig. 3

Umfangskraft $F_x$

$F_{x,max} = \mu_{max} F_z$

$F_{x,G} = \mu_G\, F_z$

instabiler Bereich

Umfangssteifigkeit $c_l$

0    $s_{max}$    1    $s$

0%    100%

## Fig. 4

Umfangsschlupf

$v \cdot \cos \alpha$

$v \cdot \sin \alpha$

Schräglaufwinkel

$\alpha$

$v$

$F_x$ Umfangskraft
(Längskraft)

$F_y$ Seitenkraft

$F_z$

Vertikalkraft
(Hochkraft)

Seitenkraft und Schräglaufwinkel

Fig. 5

$\alpha$

Fahrt

$F_y$

$\alpha$

$F_y$

$\alpha$

$F_y$

$\alpha$

$F_y$

Fahrt

$\alpha$

$F_y$

$\alpha$

$F_y$

Fig. 6

Linie mit konstantem Schräglaufwinkel im Umfangskraft-Seitenkraft-Kennfeld

Fig. 7

Fig. 8

**Fig. 9**

Fig. 10

Schlupf-Kennlinie

flacher Ast

normaler Ast

steiler Ast

maximale Haftreibung

Haftreibungs-faktor μ

Schlupf

Fig. 11

32

Fig. 12

Fig. 13

# Signal-Flussdiagramm der:
## Elektronischen Differentialregelung zur Lenkunterstützung für drehmomentgeregelte elektrisch angetriebeneFahrzeuge mit Gummibereifung

Legende

Controller   Referenz-   Aktor
wert

8

tatsächliche Motordrehzahl links [U/min]

| Berechnung des Kurven-radiuses und der optimalen Rad-geschwindig-keit |

Lenkwinkel

Lenkwinkel [°]

Referenz-Drehzahl links [U/min]

P-Geschwin-digkeits-regler

Korrektur des Drehmoments links [Nm]

Drehmoment_Links [Nm]

Linker Hinterrad-Motor

Referenz-Drehmoment für ein Fahrzeug

Referenz-Drehzahl rechts[U/min]

P-Geschwin-digkeits-regler

Korrektur des Drehmoments rechts [Nm]

Drehmoment_Rechts [Nm]

Rechter Hinterrad-Motor

15

16

tatsächliche Motordrehzahl rechts [U/min]

Referenzwert                Controller                Aktor

Fig. 14

EP 1 982 886 B1

Fig. 15

Kennlinie 2 b - T282
Traktionskraft - Geschwindigkeitskennlinie T282 (3000HP), 360 t
(R dyn. = 1892 mm, i = 37,3)

(Tabelle 2)

Fig. 16

Spur A

Spur B

Vierfachauswertung

flankenabhängige
Einfachauswertung

Fig. 1 7

Spur A

Spur B

Vierfachauswertung

flankenabhängige
Einfachauswertung

Fig. 1 8

**Signal-Flussdiagramm der:**
**Stop-Regelung für drehmomentgeregelte elektrisch angetriebene**
**Fahrzeuge mit Gummibereifung**

FIG. 19

## Signal-Flussdiagramm der:
## Anti-Rück-Roll-Regelung für drehmomentgeregelte
## elektrisch angetriebene Fahrzeuge mit Gummibereifung

Legende

Controller     Referenz-     Aktor
                wert

22

n [U/min]

23

PI-
Geschwin-
digkeits-
Regelung

Rück-Roll-
Erkennung:          n_soll [Upm]          M_Stop [Nm]

                                                           M_FC [Nm]

n < 0
UND
M_soll >= 0          b_Anti_Roll                    FC Hinterradmotor

                    [Set_Mechanische_Bremse]        Schalter

Referenz-Drehmoment
für ein Fahrzeug     M_soll [Nm]

Fig. 20

EP 1 982 886 B1

FIG. 2

Fig. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1359032 A2
- WO 9204196 A
- EP 1466772 A2
- US 20070021875 A1